# EUROPEAN PATENT APPLICATION

(11) **EP 4 817 418 A1**
(43) Date of publication of application: **07.10.2026**
(21) Application number: 24897701.9
(22) Date of filing: 29.11.2024
(51) Int. Cl.: A01N 37/44, A01N 37/10, A01N 43/38, A01P 21/00

(54) **METHOD FOR INDUCING HIGH-TEMPERATURE STRESS TOLERANCE IN PLANTS**

(30) Priority: 30.11.2023 JP 2023203249
(71) Applicant: AJINOMOTO CO., INC., Chuo-ku Tokyo 104-8315 (JP)
(72) Inventor: LANG, Yaqin, Kawasaki-shi, Kanagawa 210-8681 (JP); YOKOI, Daisuke, Kawasaki-shi, Kanagawa 210-8681 (JP); TAKEDA, Taito, Kawasaki-shi, Kanagawa 210-8681 (JP)
(74) Representative: Strehl & Partner mbB
(86) International application number: PCT/JP2024/042355
(87) International publication number: WO 2025/116019

(57) **Abstract**

An object of the present invention is to provide a technique for inducing heat stress tolerance in plants. In the present invention, heat stress tolerance in plants is induced by using the combination of a substance having a property of altering amino acid metabolism in plants, such as valine, and a substance having auxin-like activity, such as indole-3-acetic acid.

## Description

### TECHNICAL FIELD

The present invention relates to a technique for inducing heat stress tolerance in plants.

### BACKGROUND ART

Substances having a property of altering amino acid metabolism in plants (for example, branched-chain amino acids such as valine and related compounds thereof) are known to have a function of inducing heat stress tolerance in plants (Patent Document 1).

Auxins such as indole-3-acetic acid (IAA) are known to have a function of reversing plant male sterility caused by high temperatures (Non-patent Document 1).

### PRIOR ART DOCUMENTS

### Patent Documents

Patent Document 1: JP2012-197249A

### Non-patent Documents

Non-patent Document 1: Tadashi Sakata et al., Auxins reverse plant male sterility caused by high temperatures, Proc Natl Acad Sci USA, 2010 May 11; 107(19): 8569-74.

### SUMMARY OF THE INVENTION

### PROBLEMS TO BE SOLVED BY THE INVENTION

An object of the present invention is to provide a technique for inducing heat stress tolerance in plants.

### MEANS FOR SOLVING THE PROBLEMS

In order to solve the above problems, the present inventors have intensively studied to find that heat stress tolerance in plants can be markedly induced by applying a substance having a property of altering amino acid metabolism in plants, such as valine, and a substance having auxin-like activity, such as IAA, in combination to the plant, thereby completing the present invention.

Specifically, the present invention is exemplified as follows.
[1] A composition for inducing heat stress tolerance in a plant, the composition comprising the following ingredients (A) and (B):
   (A) a substance having a property of altering amino acid metabolism in a plant; and
   (B) a substance having auxin-like activity.
[2] The composition described above, wherein the ingredient (A) is the following ingredient (A1), (A2), (A3), or a combination thereof:
   (A1) one or more ingredients selected from the group consisting of branched-chain amino acid-related compounds, and intermediates in biosynthetic pathways and catabolic pathways thereof;
   (A2) a substance having inhibitory activity on acetolactate synthase; and
   (A3) a substance having inhibitory activity on 5-enolpyruvylshikimate-3-phosphate synthase.
[3] The composition described above, wherein the ingredient (A1) is one or more ingredients selected from the group consisting of pyruvic acid, ketobutyric acid, acetolactic acid, acetohydroxybutyric acid, 2,3-dihydroxyisovaleric acid, 2,3-dihydroxy-3-methylvaleric acid, α-ketoisovaleric acid, ketomethylvaleric acid, 2-isopropylmalic acid, 3-isopropylmalic acid, ketoisocaproic acid, valine, leucine, isoleucine, and derivatives thereof.
[4] The composition described above, wherein the ingredient (A1) is one or more ingredients selected from the group consisting of valine, leucine, and α-ketoisovaleric acid.
[5] The composition described above, wherein the branched-chain amino acid is an L-isomer.
[6] The composition described above, wherein the ingredient (A2) is one or more ingredients selected from the group consisting of sulfonylurea compounds, imidazoline compounds, pyrimidinylsalicylic acid compounds, triazolopyrimidinesulfonamide compounds, pyrimidinyl(thio)benzoate compounds, sulfonanilide compounds, and sulfonylaminocarbonyltriazolinone compounds.
[7] The composition described above, wherein the ingredient (A3) is glyphosate.
[8] The composition described above, wherein the ingredient (B) is one or more ingredients selected from the group consisting of indole-3-acetic acid, 4-chloroindole-3-acetic acid, 2,4-dichlorophenoxyacetic acid, 2,4,5-trichlorophenoxyacetic acid, naphthaleneacetic acid, naphthoxyacetic acid, phenylacetic acid, and analogs thereof.
[9] The composition described above, wherein the ingredient (B) is one or more ingredients selected from the group consisting of indole-3-acetic acid and phenylacetic acid.
[10] The composition described above, wherein the composition is used in the form of a liquid containing the ingredient (A1) at a concentration of 200 µM to 200 mM.
[11] The composition described above, wherein the composition is used in the form of a liquid containing the ingredient (A2) at a concentration of 5 nM to 5 µM.
[12] The composition described above, wherein the composition is used in the form of a liquid containing the ingredient (A3) at a concentration of 500 nM to 100 µM.
[13] The composition described above, wherein the composition is used in the form of a liquid containing the ingredient (B) at a concentration of 500 nM to 500 µM.
[14] The composition described above, wherein the induction of heat stress tolerance is the alleviation of heat stress symptoms.
[15] The composition described above, wherein the alleviation of the heat stress symptoms is an increase in plant yield.
[16] The composition described above, wherein the plant is a Poaceae plant, a Solanaceae plant, a Cucurbitaceae plant, a Fabaceae plant, a Brassicaceae plant, a Rosaceae plant, a Moraceae plant, a Malvaceae plant, an Apiaceae plant, a Liliaceae plant, an Asteraceae plant, an Amaranthaceae plant, an Ericaceae plant, a Vitaceae plant, a Rutaceae plant, a Rubiaceae plant, an Oleaceae plant, a Lauraceae plant, an Anacardiaceae plant, a Sapindaceae plant, or a Lamiaceae plant.
[17] A method of inducing heat stress tolerance in a plant, the method comprising applying the following ingredients (A) and (B) to the plant:
   (A) a substance having a property of altering amino acid metabolism in a plant; and
   (B) a substance having auxin-like activity.
[18] A method of producing a plant body, the method comprising:
   applying the following ingredients (A) and (B):
      (A) a substance having a property of altering amino acid metabolism in a plant; and
      (B) a substance having auxin-like activity;
   to a plant and cultivating the plant; and
   harvesting the plant body.
[19] The method described above, wherein the ingredient (A) is the following ingredient (A1), (A2), (A3), or a combination thereof:
   (A1) one or more ingredients selected from the group consisting of branched-chain amino acid-related compounds, and intermediates in biosynthetic pathways and catabolic pathways thereof;
   (A2) a substance having inhibitory activity on acetolactate synthase; and
   (A3) a substance having inhibitory activity on 5-enolpyruvylshikimate-3-phosphate synthase.
[20] The method described above, wherein the ingredient (A1) is one or more ingredients selected from the group consisting of pyruvic acid, ketobutyric acid, acetolactic acid, acetohydroxybutyric acid, 2,3-dihydroxyisovaleric acid, 2,3-dihydroxy-3-methylvaleric acid, α-ketoisovaleric acid, ketomethylvaleric acid, 2-isopropylmalic acid, 3-isopropylmalic acid, ketoisocaproic acid, valine, leucine, isoleucine, and derivatives thereof.
[21] The method described above, wherein the ingredient (A1) is one or more ingredients selected from the group consisting of valine, leucine, and α-ketoisovaleric acid.
[22] The method described above, wherein the branched-chain amino acid is an L-isomer.
[23] The method described above, wherein the ingredient (A2) is one or more ingredients selected from the group consisting of sulfonylurea compounds, imidazoline compounds, pyrimidinylsalicylic acid compounds, triazolopyrimidinesulfonamide compounds, pyrimidinyl(thio)benzoate compounds, sulfonanilide compounds, and sulfonylaminocarbonyltriazolinone compounds.
[24] The method described above, wherein the ingredient (A3) is glyphosate.
[25] The method described above, wherein the ingredient (B) is one or more ingredients selected from the group consisting of indole-3-acetic acid, 4-chloroindole-3-acetic acid, 2,4-dichlorophenoxyacetic acid, 2,4,5-trichlorophenoxyacetic acid, naphthaleneacetic acid, naphthoxyacetic acid, phenylacetic acid, and analogs thereof.
[26] The method described above, wherein the ingredient (B) is one or more ingredients selected from the group consisting of indole-3-acetic acid and phenylacetic acid.
[27] The method described above, wherein the ingredient (A1) is used in the form of a liquid containing the ingredient (A1) at a concentration of 200 µM to 200 mM.
[28] The method described above, wherein the ingredient (A2) is used in the form of a liquid containing the ingredient (A2) at a concentration of 5 nM to 5 µM.
[29] The method described above, wherein the ingredient (A3) is used in the form of a liquid containing the ingredient (A3) at a concentration of 500 nM to 100 µM.
[30] The method described above, wherein the ingredient (B) is used in the form of a liquid containing the ingredient (B) at a concentration of 500 nM to 500 µM.
[31] The method described above, wherein the induction of heat stress tolerance is the alleviation of heat stress symptoms.
[32] The method described above, wherein the alleviation of the heat stress symptoms is an increase in plant yield.
[33] The method described above, wherein the plant is a Poaceae plant, a Solanaceae plant, a Cucurbitaceae plant, a Fabaceae plant, a Brassicaceae plant, a Rosaceae plant, a Moraceae plant, a Malvaceae plant, an Apiaceae plant, a Liliaceae plant, an Asteraceae plant, an Amaranthaceae plant, an Ericaceae plant, a Vitaceae plant, a Rutaceae plant, a Rubiaceae plant, an Oleaceae plant, a Lauraceae plant, an Anacardiaceae plant, a Sapindaceae plant, or a Lamiaceae plant.

### EFFECTS OF THE INVENTION

According to the present invention, heat stress tolerance in plants can be induced.

### BRIEF DESCRIPTION OF THE DRAWINGS

Fig. 1 shows tomato plants immediately before harvest that were subjected to heat stress treatment and treatment with Val and/or IAA.
Fig. 2 shows harvested tomato fruits that were subjected to heat stress treatment and treatment with Val and/or IAA.
Fig. 3 shows the cumulative number of tomato fruits that were subjected to heat stress treatment and treatment with Val and/or IAA.
Fig. 4 shows the number of tomato fruits that were subjected to heat stress treatment and treatment with Val and/or PAA.
Fig. 5 shows the weight of tomato fruits that were subjected to heat stress treatment and treatment with Val and/or PAA.
Fig. 6A and Fig. 6B show the results of evaluation of heat stress tolerance-related genes in tomatoes that were subjected to heat stress treatment and treatment with Val and/or an auxin (IAA or PAA). Fig. 6A shows the result for SLHsFA2, and Fig. 6B shows the result for SLAPX.
Fig. 7 shows the weight of tomato fruits subjected to heat stress treatment and treatment with Val and/or PAA (pot test). Ave represents the average, and R1, R2, and R3 represent values for respective individuals.
Fig. 8 shows Brix of tomato fruits subjected to heat stress treatment and treatment with Val and/or PAA (pot test). Ave represents the average, and R1, R2, and R3 represent values for respective individuals.
Fig. 9A, Fig. 9B, and Fig. 9C show the total seed weight, the fertile seed weight, and the seed fertility of rice subjected to heat stress treatment and treatment with Val and/or PAA. Fig. 9A shows results on the total seed weight. Fig. 9B shows results on the fertile seed weight. Fig. 9C shows results on the seed fertility.

### EMBODIMENTS FOR CARRYING OUT THE INVENTION

The present invention is described in detail below.

In the present invention, the following ingredients (A) and (B) are used:
(A) a substance having a property of altering amino acid metabolism in plants;
(B) a substance having auxin-like activity.

Ingredients (A) and (B) are collectively referred to as "active ingredients."

By using the active ingredients, specifically, by applying the active ingredients to plants, heat stress tolerance in the plant can be induced. In other words, an effect of inducing heat stress tolerance in the plant can be obtained. This effect is also referred to as a "heat stress tolerance-inducing effect." The term "induction of heat stress tolerance in plants" may be used interchangeably with the term "imparting heat stress tolerance to plants" or the term "improvement of heat stress tolerance in plants." The term "heat stress tolerance" means tolerance to heat stress. Heat stress tolerance is also referred to as "heat tolerance."

Examples of induction of heat stress tolerance include an increase in expression of genes involved in heat stress tolerance. Thus, the induction of heat stress tolerance in plants can be confirmed, for example, using, as an indicator, an increase in expression of genes involved in heat stress tolerance. Thus, when expression of genes involved in heat stress tolerance is increased in a case where the active ingredients are used than in a case where they are not used, it can be judged that heat stress tolerance in the plant has been induced by the active ingredients. The judgment may also be made when expression of genes involved in heat stress tolerance is increased in a case where the ingredients (A) and (B) are used in combination than in a case where the ingredient (A) or (B) is used alone. The term "increase in expression of genes" may be used interchangeably with "induction of expression of genes." Specifically, the term "increase in expression of genes" may mean an increase in expression of the gene before exposure to heat stress, during exposure to heat stress, and/or after exposure to heat stress. The term "before exposure to heat stress" may mean, for example, any time point before exposing the plant to the heat stress. Specifically, the term "before exposure to heat stress" may mean, for example, immediately before exposing the plant to the heat stress. The term "during exposure to heat stress" may mean, for example, any time point during a period in which the plant is exposed to heat stress. Specifically, for example, the term "during exposure to heat stress" may mean any time point during a period in which the plant is exposed to heat stress at which heat stress symptoms are induced in plants in the absence of use of the active ingredients. The term "after exposure to heat stress" may mean, for example, any time point after exposing the plant to heat stress. Specifically, for example, the term "after exposure to heat stress" may mean any time point after exposing the plant to heat stress at which heat stress symptoms are induced in plants in the absence of use of the active ingredients. By using the active ingredients, for example, expression of genes involved in heat stress tolerance may be increased by 1.2-fold or more, preferably 1.5-fold or more, more preferably 2-fold or more compared to a case where the active ingredients are not used. Further, the "increase in expression of genes" also includes a case where expression of genes is observed when the active ingredients are used, while the expression is not observed when the active ingredients are not used. Examples of genes involved in heat stress tolerance include heat stress-responsive genes such as HSP100 and HSFA2. By using the active ingredients, for example, expression of one or more (for example, all) genes selected from these genes involved in heat stress tolerance may be increased. The increase in expression of genes can be confirmed, for example, by measuring the transcription level (for example, the mRNA level) of the gene, the translation level of the gene (for example, the amount of a protein encoded by the gene), or activity of a protein encoded by the gene. Examples of methods of measuring the mRNA level include Northern hybridization and RT-PCR. Examples of methods of measuring the amount of the protein include Western blotting. A method of measuring the activity of a protein can be appropriately selected depending on various conditions such as the type of the target protein.

Examples of induction of heat stress tolerance in plants include the alleviation of heat stress symptoms. Thus, the induction of heat stress tolerance in plants can be confirmed, for example, using, as an indicator, the alleviation of heat stress symptoms. Thus, when heat stress symptoms are alleviated in a case where the active ingredients are used compared to a case where they are not used, it can be judged that heat stress tolerance in the plant has been induced by the active ingredients. The judgment may also be made when heat stress symptoms are alleviated in a case where the ingredients (A) and (B) are used in combination compared to a case where the ingredient (A) or (B) is used alone. The term "heat stress symptoms" may mean symptoms induced by heat stress. Examples of heat stress symptoms include deterioration of plant growth, a decrease in the plant yield, defective anther formation, a decrease in pollen fertility, plant death, plant cell death, a decrease in photosynthetic activity of plants, a decrease in the chlorophyll content in plant cells, and inhibition of pollination. Thus, examples of induction of heat stress tolerance (specifically, the alleviation of heat stress symptoms) in plants include improvement of plant growth, an increase in the plant yield, suppression of defective anther formation, suppression of a decrease in pollen fertility, suppression of plant death, suppression of plant cell death, an increase in photosynthetic activity of plants, an increase in the chlorophyll content in plant cells, and suppression of inhibition of pollination.

The term "improvement of plant growth" may mean, for example, that the degree of growth of plants after exposure to heat stress is higher in a case where the active ingredients are used than in a case where the active ingredients are not used. Examples of degree of growth include the amount of growth and the growth rate. The term "amount of growth" may mean, for example, the amount of increase in the fresh weight of an aboveground part of plant bodies. The term "growth rate" may mean, for example, the amount of increase in the fresh weight of an aboveground part of plant bodies per unit time. By using the active ingredients, for example, the degree of growth of plants after exposure to heat stress may be increased by 1.2-fold or more, preferably 1.5-fold or more, more preferably 2-fold or more compared to a case where the active ingredients are not used.

The term "increase in the plant yield" may mean, for example, that the plant yield after exposure to heat stress is higher in a case where the active ingredients are used than in a case where the active ingredients are not used. Examples of increases in the plant yield include an increase in the overall yield of plant bodies and an increase in the yield of a part of plant bodies, such as a leaf, a root, a fruit, or a seed. The increase in the plant yield may be measured, for example, as an increase in the fresh weight of harvested plant bodies or an increase in the number of harvested plant bodies. By using the active ingredients, for example, the plant yield after exposure to heat stress may be increased by 1.2-fold or more, preferably 1.5-fold or more, more preferably 2-fold or more compared to a case where the active ingredients are not used.

The term "suppression of plant death" may mean, for example, that the death rate of plants due to exposure to heat stress (that is, the value obtained by subtracting, from 100%, the ratio of the number of surviving plant individuals after exposure to heat stress to the number of surviving plant individuals before the exposure to heat stress) is lower in a case where the active ingredients are used than in a case where the active ingredients are not used. By using the active ingredients, for example, the death rate of plants due to exposure to heat stress may be reduced to not more than 90%, preferably not more than 70%, more preferably not more than 50% compared to a case where the active ingredients are not used.

The term "suppression of plant cell death" may mean, for example, that the dead cell rate after exposure to heat stress (that is, the ratio of the number of dead cells to the total number of cells of the plant) is lower in a case where the active ingredients are used than in a case where the active ingredients are not used. By using the active ingredients, for example, the dead cell rate after exposure to heat stress may be reduced to not more than 90%, preferably not more than 70%, more preferably not more than 50% compared to a case where the active ingredients are not used.

The term "increase in photosynthetic activity of plants" may mean, for example, that photosynthetic activity of plants after exposure to heat stress is higher in a case where the active ingredients are used than in a case where the active ingredients are not used. By using the active ingredients, for example, photosynthetic activity of plants after exposure to heat stress may be increased by 1.2-fold or more, preferably 1.5-fold or more, more preferably 2-fold or more compared to a case where the active ingredients are not used.

The term "increase in the chlorophyll content in plant cells" may mean, for example, that the chlorophyll content in plant cells after exposure to heat stress is higher in a case where the active ingredients are used than in a case where the active ingredients are not used. By using the active ingredients, for example, the chlorophyll content in plant cells after exposure to heat stress may be increased by 1.2-fold or more, preferably 1.5-fold or more, more preferably 2-fold or more compared to a case where the active ingredients are not used. The chlorophyll content in plant cells can be measured, for example, by a method described in JP2012-197249A.

The term "alleviation of heat stress symptoms" also includes a case where heat stress symptoms completely disappear. The term "alleviation of heat stress symptoms" includes both the alleviation of heat stress symptoms that may occur in the future (the so-called preventive effect) and the alleviation of heat stress symptoms that have already occurred (the so-called therapeutic effect). Examples of alleviation of heat stress symptoms that may occur in the future include a case where no heat stress symptom occurs in the future and a case where heat stress symptoms are alleviated even when the heat stress symptoms occur in the future. Examples of alleviation of heat stress symptoms that have already occurred include a case where the heat stress symptoms that have already occurred are improved and a case where worsening of the heat stress symptoms that have already occurred are prevented. The alleviation of heat stress symptoms may be, for example, due to increased expression of genes involved in heat stress tolerance.

### <1> Plant

The type of the plant is not particularly limited. The plant may be a woody plant, or may be an herbaceous plant. Examples of plants include Poaceae plants (such as rice, barley, wheat, maize, sorghum, millet, sugarcane, oat, lawn grass, pearl millet, finger millet, and fonio), Solanaceae plants (such as tomato, bell pepper, eggplant, potato, and tobacco), Cucurbitaceae plants (such as cucumber, melon, and pumpkin), Fabaceae plants (such as pea, soybean, common bean, alfalfa, peanut, broad bean, cowpea, lentil, chickpea, clover, peanut, and bambara groundnut), Brassicaceae plants (such as Japanese radish, Chinese cabbage, cabbage, komatsuna, rapeseed, bok choy, and *Arabidopsis thaliana*), Rosaceae plants (such as strawberry, apple, pear, and peach), Moraceae plants (such as mulberry), Malvaceae plants (such as cotton), Apiaceae plants (such as carrot, parsley, and celery), Liliaceae plants (such as green onion, onion, and asparagus), Asteraceae plants (such as burdock, sunflower, chrysanthemum, crown daisy, safflower, and lettuce), Amaranthaceae plants (such as sugar beet), Ericaceae plants (such as blueberry and cranberry), Vitaceae plants (such as grape), Rutaceae plants (such as satsuma mandarin, lemon, and yuzu), Rubiaceae plants (such as coffee plant), Oleaceae plants (such as olive), Lauraceae plants (such as avocado), Anacardiaceae plants (such as mango and cashew), Sapindaceae plants (such as lychee), and Lamiaceae plants (such as coleus). Examples of plants include, in particular, Solanaceae plants such as tomato, and Poaceae plants such as rice. Further, examples of plants include, in particular, plants from which edible products such as fruits can be harvested. The plants may be one type of plant, or may be two or more types of plants.

### <2> Active ingredients

### <2-1> Substance Having a Property of Altering Amino Acid Metabolism in Plants; ingredient (A)

Ingredient (A) is a substance having a property of altering amino acid metabolism in plants. As ingredient (A), one ingredient may be used, or two or more ingredients may be used in combination.

In the present invention, any substance may be used as ingredient (A) without limitation as long as the substance has an activity of altering amino acid metabolism in plants and produces the effect of the present invention. The case where "a substance has a property of altering amino acid metabolism in plants" is not limited to a case where the substance itself has a property of altering amino acid metabolism in plants, and also includes a case where the substance is metabolized to generate another substance, and the generated substance has a property of altering amino acid metabolism in plants.

Examples of properties of altering amino acid metabolism include a property of inhibiting amino acid biosynthesis.

Examples of properties of inhibiting amino acid biosynthesis include a property of inhibiting biosynthesis of branched-chain amino acids and a property of inhibiting biosynthesis of aromatic amino acids.

Examples of properties of inhibiting biosynthesis of branched-chain amino acids include a property of inhibiting activity of an enzyme in a branched-chain amino acid biosynthetic pathway (also referred to as a "branched-chain amino acid synthase"). Examples of properties of inhibiting biosynthesis of aromatic amino acids include a property of inhibiting activity of an enzyme in an aromatic amino acid biosynthetic pathway (also referred to as an "aromatic amino acid synthase").

Examples of branched-chain amino acids include valine, leucine, and isoleucine. Examples of aromatic amino acids include phenylalanine, tryptophan, and tyrosine. Thus, "inhibiting biosynthesis of branched-chain amino acids" may mean, for example, inhibiting biosynthesis of one or more (specifically, one, two, or all three) amino acids selected from valine, leucine, and isoleucine. "Inhibiting biosynthesis of aromatic amino acids" may mean, for example, inhibiting biosynthesis of one or more (specifically, one, two, or all three) amino acids selected from phenylalanine, tryptophan, and tyrosine.

### (Ingredient A1)

Examples of substances having a property of altering amino acid metabolism in plants include branched-chain amino acids and branched-chain amino acid derivatives (hereinafter, these are also collectively referred to as "branched-chain amino acid-related compounds"), and intermediates in biosynthetic pathways and catabolic pathways thereof (hereinafter, these are also collectively referred to as "ingredient A1").

The term "branched-chain amino acid derivatives" refers to various derivatives of branched-chain amino acids. Examples of branched-chain amino acid derivatives may be, for example, an unusual amino acid, a non-natural amino acid, or an amino alcohol; or an amino acid in which one or more functional groups such as a terminal carbonyl group and a terminal amino group are substituted with various substituents. Specific examples of substituents include an alkyl group, an acyl group, a hydroxy group, an amino group, an alkylamino group, a nitro group, a sulfonyl group, and various protecting groups.

Examples of amino acid derivatives also include glycosides. Examples of glycosides include monosaccharides such as glucose, glucosamine, *N*-acetylglucosamine, mannose, galactose, fructose, ribose, lyxose, xylose, and arabinose; and polysaccharides composed of these monosaccharides.

Examples of amino acid derivatives include intermediates in biosynthetic pathways and catabolic pathways of branched-chain amino acid-related compounds. In plant bodies, branched-chain amino acids can generally be biosynthesized using pyruvic acid or ketobutyric acid as a starting material. Ketobutyric acid can be derived from threonine. Specifically, valine and leucine can be synthesized via acetolactic acid using pyruvic acid as a starting material. Further, specifically, isoleucine can be synthesized via acetohydroxybutyric acid using pyruvic acid and ketobutyric acid as starting materials. That is, the phrase "intermediates in biosynthetic pathways of branched-chain amino acid-related compounds" may mean compounds in biosynthetic pathways from pyruvic acid or ketobutyric acid to branched-chain amino acids (for example, valine, leucine, and isoleucine). Further, the term "intermediates in catabolic pathways of branched-chain amino acid-related compounds" may mean compounds produced by further metabolism of branched-chain amino acids (for example, valine, leucine, and isoleucine). Specific examples of ingredient A1 include pyruvic acid, ketobutyric acid, acetolactic acid, acetohydroxybutyric acid, 2,3-dihydroxyisovaleric acid, 2,3-dihydroxy-3-methylvaleric acid, α-ketoisovaleric acid, ketomethylvaleric acid, 2-isopropylmalic acid, 3-isopropylmalic acid, ketoisocaproic acid, valine, leucine, isoleucine, and derivatives thereof. Examples of ingredient A1 include, in particular, valine, leucine, and α-ketoisovaleric acid. As ingredient A1, one substance may be used, or two or more substances may be used in combination.

Each substance used as ingredient A1 has, as a property of altering amino acid metabolism in plants, for example, inhibitory activity on acetolactate synthase (ALS), which is a branched-chain amino acid synthase. ALS is also referred to as acetohydroxyacid synthase (AHAS). ALS catalyzes both the reaction of synthesis of acetolactic acid and the reaction of synthesis of acetohydroxy acid (EC 2.2.1.6).

Unless otherwise specified, a branched-chain amino acid (such as valine, leucine, and isoleucine) may be a D-isomer, an L-isomer, or a combination thereof. The ratio of the D-isomer and the L-isomer in the combination is not particularly limited. The ratio of each of the D-isomer and the L-isomer in the combination may be, for example, 20 to 80%, 30 to 70%, 40 to 60%, or 45 to 55% in terms of molar ratio. The amino acid may, in particular, be an L-isomer. Further, in cases where a D-isomer or an L-isomer of a branched-chain amino acid is selected, use of the D-isomer or the L-isomer of the branched-chain amino acid alone as an active ingredient is sufficient, and this does not preclude the combined use with the L-isomer or the D-isomer of the branched-chain amino acid.

### (Ingredient A2)

Examples of substances having a property of inhibiting biosynthesis of a branched-chain amino acid include a substance having inhibitory activity on acetolactate synthase (ALS), which is a branched-chain amino acid synthase (hereinafter also referred to as "ingredient A2" or an "ALS inhibitor").

Preferably, the ALS inhibitor does not exhibit toxicity to humans, or has only low toxicity to humans. Conventionally, as an herbicide, an ALS inhibitor having plant selectivity together with long residual activity has been used. An ALS inhibitor inhibits ALS activity in plants to inhibit biosynthesis of valine, leucine, and isoleucine, and hence to alter amino acid metabolism in the plant, thereby affecting growth of the plant.

Examples of ALS inhibitors include sulfonylurea compounds (SU agents), imidazoline compounds, pyrimidinylsalicylic acid compounds, triazolopyrimidinesulfonamide compounds, pyrimidinyl(thio)benzoate (PTB) compounds, sulfonanilide (SA) compounds, and sulfonylaminocarbonyltriazolinone (SCT) compounds.

Examples of sulfonylurea compounds include thifensulfuron-methyl, trifloxysulfuron sodium salt, pyrazosulfuron-ethyl, bensulfuron-methyl, cinosulfuron, imazosulfuron, azimsulfuron, halosulfuron-methyl, ethoxysulfuron, cyclosulfamuron, amidosulfuron, chlorimuron-ethyl, sulfometuron-methyl, oxasulfuron, primisulfuron, mesosulfuron-methyl, foramsulfuron, chlorsulfuron, metsulfuron-methyl, tribenuron-methyl, iodosulfuron, isosulfuron-methyl sodium salt, prosulfuron, triasulfuron, tritosulfuron, ethametsulfuron-methyl, triflusulfuron-methyl, rimsulfuron, nicosulfuron, flupyrsulfuron, and sulfosulfuron.

Examples of imidazoline compounds include imazapyr, imazamethabenz, imazamethapyr, imazethapyr, imazamox, imazaquin, and imazaquin ammonium.

Examples of pyrimidinylsalicylic acid compounds include bispyribac sodium salt, pyrithiobac sodium salt, pyriminobac-methyl, pyriftalid, and pyribenzoxim.

Examples of triazolopyrimidinesulfonamide compounds include flumetsulam, florasulam, metosulam, diclosulam, chloransulam-methyl, penosuclam, and DASH-001 (penoxsulam).

Examples of pyrimidinyl(thio)benzoate (PTB) compounds include pyriminobac-methyl, bispyribac sodium salt, and pyrithiobac sodium salt.

Examples of sulfonanilide (SA) compounds include pyrimisulfan and triafamone.

Examples of sulfonylaminocarbonyltriazolinone (SCT) compounds include flucarbazone sodium salt and thiencarbazone-methyl.

Examples of ALS inhibitors include, in particular, thifensulfuron-methyl, imazapyr, and bispyribac sodium salt.

As ingredient A2, one substance may be used, or two or more substances may be used in combination.

### (Ingredient A3)

Examples of compounds having a property of inhibiting biosynthesis of aromatic amino acids include a substance having inhibitory activity on 5-enolpyruvylshikimate-3-phosphate synthase (EPSPS), which is an aromatic amino acid synthase (hereinafter also referred to as "ingredient A3" or an "EPSPS inhibitor").

Preferably, the EPSPS inhibitor does not exhibit toxicity to humans, or has only low toxicity to humans. Conventionally, as an herbicide, an EPSPS inhibitor has been used. An EPSPS inhibitor inhibits EPSPS activity in plants to inhibit biosynthesis, through the shikimate pathway, of phenylalanine, tryptophan, and tyrosine, and hence to alter amino acid metabolism in the plant, thereby affecting growth of the plant.

Examples of EPSPS inhibitors include glyphosate. Glyphosate is known as an agricultural chemical ingredient that inhibits the shikimate pathway. As described later, glyphosate may be in a free form, may be a salt, or may be a combination thereof. Glyphosate is preferably a water-soluble glyphosate salt. Examples of water-soluble glyphosate salts include a potassium salt, an isopropylamine salt, an ammonium salt, a sodium salt, and a trimethylsulfonium salt of glyphosate.

As ingredient A3, one substance may be used, or two or more substances may be used in combination.

In cases where ingredient (A) can form a salt, ingredient (A) may be used as a free form, may be used as a salt, or may be used as a combination thereof. Specifically, unless otherwise specified, the term "ingredient (A)" may mean ingredient (A) in a free form, a salt thereof, or a combination thereof. The salt is not particularly limited as long as it does not impair the effect of the present invention. Examples of salts formed with an acidic group such as a carboxyl group include an ammonium salt; a salt with an alkali metal such as sodium or potassium; a salt with an alkaline earth metal such as calcium or magnesium; an aluminum salt; a zinc salt; a salt with an organic amine such as triethylamine, ethanolamine, morpholine, pyrrolidine, piperidine, piperazine, or dicyclohexylamine; and a salt with a basic amino acid such as arginine or lysine. Examples of salts formed with a basic group such as an amino group include a salt with an inorganic acid such as hydrochloric acid, sulfuric acid, phosphoric acid, nitric acid, or hydrobromic acid; a salt with an organic carboxylic acid such as acetic acid, citric acid, benzoic acid, maleic acid, fumaric acid, tartaric acid, succinic acid, tannic acid, butyric acid, hibenzic acid, pamoic acid, enanthic acid, decanoic acid, teoclic acid, salicylic acid, lactic acid, oxalic acid, mandelic acid, or malic acid; and a salt with an organic sulfonic acid such as methanesulfonic acid, benzenesulfonic acid, or *p*-toluenesulfonic acid. As the salt, one salt may be used, or two or more salts may be used in combination.

In cases where ingredient (A) can form a hydrate, ingredient (A) may be used as an anhydrate, may be used as a hydrate, or may be used as a combination thereof. Specifically, unless otherwise specified, the term "ingredient (A)" (for example, "ingredient (A) in a free form" or "a salt of ingredient (A)") may encompass anhydrates and hydrates.

At the time of use, ingredient (A) may be in any form such as an ion.

As ingredient (A), one substance may be used, or two or more substances may be used in combination. Unless otherwise specified, in cases where two or more ingredients are selected as ingredient (A), the "amount" or "concentration" of ingredient (A) (that is, the "amount" or "concentration" of ingredient (A)) may mean the total amount or total concentration of the selected ingredients.

As ingredient (A), a commercially available product may be used, or a product prepared as appropriate may be used. The method of producing ingredient (A) is not particularly limited. Ingredient (A) can be produced, for example, by a known method. Specifically, ingredient (A) can be produced, for example, by chemical synthesis, enzymatic reaction, fermentation, extraction, or a combination thereof. Ingredient (A) may or may not be purified to a desired degree. Specifically, as ingredient (A), a purified product may be used, or a material containing ingredient (A) may be used. Specific examples of materials containing ingredient (A) include fermented products such as a culture liquid, a microbial cell, or a culture supernatant obtained by culturing a microorganism capable of producing the ingredient (A); agricultural, aquatic, or livestock products containing the ingredient (A); and processed products thereof. Examples of processed products include those obtained by subjecting a material, such as a fermented product described above, to treatment such as concentration, dilution, drying, fractionation, extraction, or purification. For example, the branched-chain amino acids (such as valine, leucine, and isoleucine) may be those generally commercially available as reagents, may be purified products or crudely purified products produced by fermentation, may be by-products generated in purification processes, or may be a mixture containing the branched-chain amino acid-related compounds, such as an extract from a marine product or a protein hydrolysate. Further, for example, the agricultural chemical ingredient (such as an ALS inhibitor or an EPSPS inhibitor) may be one generally commercially available as a reagent, or may be a mixture such as an agricultural chemical containing the agricultural chemical ingredient. As ingredient (A), for example, a material having an ingredient (A) content of not less than 1% (w/w), not less than 5% (w/w), not less than 10% (w/w), not less than 30% (w/w), not less than 50% (w/w), not less than 70% (w/w), not less than 90% (w/w), or not less than 95% (w/w) may be used.

### <2-2> Substance Having Auxin-Like Activity; ingredient (B)

Ingredient (B) is a substance having auxin-like activity. As ingredient (B), one substance having auxin-like activity may be used, or two or more substances having auxin-like activity may be used in combination.

"Auxin" is a general term for plant hormones having a function of promoting plant growth (specifically, elongation growth). The auxin may be either a natural auxin or a synthetic auxin. In the present invention, any substance can be used as ingredient (B) without limitation as long as the substance has auxin-like activity of promoting plant growth, and as long as the substance exerts the effect of the present invention. The case where "a substance has auxin-like activity" is not limited to a case where the substance itself has the activity of promoting plant growth, and also includes a case where the substance is metabolized to generate another substance, and the generated substance has the activity of promoting plant growth. Examples of such a substance include, but are not limited to, auxin, auxin analogs, auxin receptor agonists, and downstream signaling factors of auxin. Preferably, auxin can be used.

Examples of auxin include indole-3-acetic acid (IAA), 4-chloroindole-3-acetic acid (4Cl-IAA), 2,4-dichlorophenoxyacetic acid (2,4-D), 2,4,5-trichlorophenoxyacetic acid (2,4,5-T), naphthaleneacetic acid, naphthoxyacetic acid, and phenylacetic acid (PAA). Examples of auxin include, in particular, IAA and PAA. Examples of auxin analogs include, for example, RubNeddin, which is an auxin receptor agonist.

As ingredient (B), a commercially available product may be used, or a product prepared as appropriate may be used. The method of producing ingredient (B) is not particularly limited. Ingredient (B) can be produced, for example, by a known method. Specifically, ingredient (B) can be produced, for example, by chemical synthesis, enzymatic reaction, fermentation, extraction, or a combination thereof. Ingredient (B) may or may not be purified to a desired degree. Specifically, as ingredient (B), a purified product may be used, or a material containing ingredient (B) may be used. Specific examples of materials containing ingredient (B) include fermented products such as a culture liquid, a microbial cell, or a culture supernatant obtained by culturing a microorganism capable of producing the ingredient (B); agricultural, aquatic, or livestock products containing the ingredient (B); and processed products thereof. Examples of processed products include those obtained by subjecting a material, such as a fermented product described above, to treatment such as concentration, dilution, drying, fractionation, extraction, or purification. As ingredient (B), for example, a material having an ingredient (B) content of not less than 1% (w/w), not less than 5% (w/w), not less than 10% (w/w), not less than 30% (w/w), not less than 50% (w/w), not less than 70% (w/w), not less than 90% (w/w), or not less than 95% (w/w) may be used.

### <3> Composition of the Present Invention

The composition of the present invention is a composition containing active ingredients (that is, the above ingredients (A) and (B)).

The composition of the present invention can be used by applying it to plants. Modes of use of the composition of the present invention are described in detail in "Method of the Present Invention." By using the composition of the present invention, specifically, by applying the composition of the present invention to plants, heat stress tolerance in the plants can be induced. In other words, the composition of the present invention may be a composition for inducing heat stress tolerance in plants. Specifically, for example, the composition of the present invention (such as a composition for inducing heat stress tolerance in plants) may be a composition for improving plant growth, for increasing the plant yield, for suppressing plant death, for suppressing plant cell death, for increasing photosynthetic activity of plants, and/or for increasing the chlorophyll content in plant cells. The induction of heat stress tolerance in plants may be, for example, due to an increase in expression of genes involved in heat stress tolerance. Thus, the composition of the present invention (for example, a composition for inducing heat stress tolerance in plants) may be, for example, a composition for increasing expression of genes involved in heat stress tolerance in plants. The composition for inducing heat stress tolerance in plants is also referred to as a "heat stress tolerance inducer for plants."

The composition of the present invention is not particularly limited as long as the composition of the present invention comprises the active ingredients, and as long as desired effects such as heat stress tolerance-inducing effects can be obtained. The types and contents of the ingredients contained in the composition of the present invention can be appropriately selected depending on various conditions such as the type of the plant, the cultivation method of the plant, the growth stage of the plant, the mode of the heat stress conditions, the degree of the heat stress symptoms, and the mode of use of the composition of the present invention.

The composition of the present invention may consist of the active ingredients, or may comprise ingredient(s) other than the active ingredients. Examples of ingredients other than the active ingredients include ingredients usually used for agricultural chemicals, fertilizers, pharmaceuticals, and the like. Specific examples of such ingredients include additives such as excipients, binders, disintegrants, lubricants, stabilizers, diluents, surfactants, spreading agents, pH-adjusting agents, fertilizer ingredients, agricultural chemical ingredients, water, alcohols, vitamins, and minerals. A spreading agent may be used, for example, to enhance spreading properties of the active ingredients to plant bodies. A surfactant may be used, for example, to increase permeability of the active ingredients into plants. Examples of excipients include solid carriers and liquid carriers. Examples of solid carriers include inorganic substances such as vermiculite, talc, diatomaceous earth, kaolin, calcium carbonate, clay, calcium hydroxide, white clay, and silica gel; wheat flour; and starch. Examples of liquid carriers include alcohols such as ethanol and ethylene glycol; ketones such as acetone; ethers such as dioxane and tetrahydrofuran; dimethylformamide; dimethyl sulfoxide; and acetonitrile. A solid carrier may be used, for example, in cases where the composition of the present invention is a solid formulation. A liquid carrier may be used, for example, in cases where the composition of the present invention is a liquid formulation. Examples of spreading agents include Approach BI^{™} (Kao Corporation), MixPower^{™} (Syngenta Japan K.K.), and Squash^{™} (Maruwa Biochemical Co., Ltd.). As ingredients other than the active ingredients, one ingredient may be used, or two or more ingredients may be used. The composition of the present invention may be formulated as appropriate. The formulation of the composition of the present invention is not particularly limited. The formulation of the composition of the present invention can be appropriately selected depending on various conditions such as the mode of use of the composition of the present invention. Examples of formulations include liquids, powders, granules, tablets, emulsions, wettable powders, oils, aerosols, and flowables.

The total content of the active ingredients in the composition of the present invention is more than 0% (w/w) and not more than 100% (w/w). For example, the total content of the active ingredients in the composition of the present invention may be not less than 0.000005%, not less than 0.00001%, not less than 0.00002%, not less than 0.00005%, not less than 0.0001%, not less than 0.0002%, not less than 0.0005%, not less than 0.001% (w/w), not less than 0.002% (w/w), not less than 0.005% (w/w), not less than 0.01% (w/w), not less than 0.02% (w/w), not less than 0.05% (w/w), not less than 0.1% (w/w), not less than 0.2% (w/w), not less than 0.5% (w/w), not less than 1% (w/w), not less than 2% (w/w), not less than 5% (w/w), or not less than 10% (w/w), and may be not more than 100% (w/w), not more than 99.9% (w/w), not more than 70% (w/w), not more than 50% (w/w), not more than 30% (w/w), not more than 20% (w/w), not more than 15% (w/w), not more than 10% (w/w), not more than 5% (w/w), not more than 2% (w/w), not more than 1% (w/w), not more than 0.5% (w/w), not more than 0.2% (w/w), not more than 0.1% (w/w), not more than 0.05% (w/w), or not more than 0.02% (w/w), or may be within a range defined as a non-contradictory combination thereof.

In the composition of the present invention, for example, the ratio of the content of ingredient (B) to the content of ingredient (A) (content of ingredient (B)/ content of ingredient (A)) as a molar ratio may be not less than 0.0002, not less than 0.0005, not less than 0.001, not less than 0.002, not less than 0.005, not less than 0.01, not less than 0.02, not less than 0.05, not less than 0.1, not less than 0.2, not less than 0.5, not less than 1, not less than 2, not less than 5, not less than 10, not less than 20, not less than 50, not less than 100, not less than 200, or not less than 500, and may be not more than 1000, not more than 500, not more than 200, not more than 100, not more than 50, not more than 20, not more than 10, not more than 5, not more than 2, not more than 1, not more than 0.5, not more than 0.2, not more than 0.1, not more than 0.05, not more than 0.02, not more than 0.01, not more than 0.005, not more than 0.002, not more than 0.001, or not more than 0.0005, or may be within a range defined as a non-contradictory combination thereof. Specifically, for example, the ratio of the content of ingredient (B) to the content of ingredient (A) (content of ingredient (B)/ content of ingredient (A)) as a molar ratio may be 0.0002 to 0.0005, 0.0005 to 0.001, 0.001 to 0.002, 0.002 to 0.005, 0.005 to 0.01, 0.01 to 0.02, 0.02 to 0.05, 0.05 to 0.1, 0.1 to 0.2, 0.2 to 0.5, 0.5 to 1, 1 to 2, 2 to 5, 5 to 10, 10 to 20, 20 to 50, 50 to 100, 100 to 200, 200 to 500, or 500 to 1000. In cases where the composition of the present invention comprises two or more ingredients (A), the contents of the two or more ingredients (A) may be set such that they independently satisfy, or their total satisfies, the above-exemplified ratio of the content of ingredient (B) to the content of ingredient (A). However, in cases where the composition of the present invention comprises two or more ingredients (A), the "content of ingredient (A) in the composition of the present invention" means, unless otherwise specified, the total content of the two or more ingredients (A) in the composition of the present invention. In cases where the composition of the present invention comprises two or more ingredients (B), the contents of the two or more ingredients (B) may be set such that they independently satisfy, or their total satisfies, the above-exemplified ratio of the content of ingredient (B) to the content of ingredient (A). However, in cases where the composition of the present invention comprises two or more ingredients (B), the "content of ingredient (B) in the composition of the present invention" means, unless otherwise specified, the total content of the two or more ingredients (B) in the composition of the present invention.

In cases where at least ingredient A1 is used as ingredient (A), in the composition of the present invention, for example, the ratio of the content of ingredient (B) to the content of ingredient A1 (content of ingredient (B)/ content of ingredient A1) as a molar ratio may be not less than 0.0002, not less than 0.0005, not less than 0.001, not less than 0.002, not less than 0.005, or not less than 0.01, and may be not more than 0.02, not more than 0.01, not more than 0.005, not more than 0.002, not more than 0.001, or not more than 0.0005, or may be within a range defined as a non-contradictory combination thereof. Specifically, for example, the ratio of the content of ingredient (B) to the content of ingredient A1 (content of ingredient (B)/ content of ingredient A1) as a molar ratio may be 0.0002 to 0.0005, 0.0005 to 0.001, 0.001 to 0.002, 0.002 to 0.005, 0.005 to 0.01, or 0.01 to 0.02. Specifically, for example, the ratio of the content of ingredient (B) to the content of ingredient A1 (content of ingredient (B)/ content of ingredient A1) as a molar ratio may be 0.0002 to 0.02, 0.0005 to 0.01, or 0.001 to 0.005. In cases where the composition of the present invention comprises two or more ingredients A1, the contents of the two or more ingredients A1 may be set such that they independently satisfy, or their total satisfies, the above-exemplified ratio of the content of ingredient (B) to the content of ingredient A1. However, in cases where the composition of the present invention comprises two or more ingredients A1, the "content of ingredient A1 in the composition of the present invention" means, unless otherwise specified, the total content of the two or more ingredients A1 in the composition of the present invention.

In cases where at least ingredient A2 is used as ingredient (A), in the composition of the present invention, for example, the ratio of the content of ingredient (B) to the content of ingredient A2 (content of ingredient (B)/ content of ingredient A2) as a molar ratio may be not less than 2, not less than 5, not less than 10, not less than 20, not less than 50, not less than 100, not less than 200, or not less than 500, and may be not more than 1000, not more than 500, not more than 200, not more than 100, not more than 50, not more than 20, not more than 10, or not more than 5, or may be within a range defined as a non-contradictory combination thereof. Specifically, for example, the ratio of the content of ingredient (B) to the content of ingredient A2 (content of ingredient (B)/ content of ingredient A2) as a molar ratio may be 2 to 5, 5 to 10, 10 to 20, 20 to 50, 50 to 100, 100 to 200, 200 to 500, or 500 to 1000. Specifically, for example, the ratio of the content of ingredient (B) to the content of ingredient A2 (content of ingredient (B)/ content of ingredient A2) as a molar ratio may be 2 to 1000, 5 to 500, or 10 to 200. In cases where the composition of the present invention comprises two or more ingredients A2, the contents of the two or more ingredients A2 may be set such that they independently satisfy, or their total satisfies, the above-exemplified ratio of the content of ingredient (B) to the content of ingredient A2. However, in cases where the composition of the present invention comprises two or more ingredients A2, the "content of ingredient A2 in the composition of the present invention" means, unless otherwise specified, the total content of the two or more ingredients A2 in the composition of the present invention.

In cases where at least ingredient A3 is used as ingredient (A), in the composition of the present invention, for example, the ratio of the content of ingredient (B) to the content of ingredient A3 (content of ingredient (B)/ content of ingredient A3) as a molar ratio may be not less than 0.1, not less than 0.2, not less than 0.5, not less than 1, not less than 2, or not less than 5, and may be not more than 10, not more than 5, not more than 2, not more than 1, not more than 0.5, or not more than 0.2, or may be within a range defined as a non-contradictory combination thereof. Specifically, for example, the ratio of the content of ingredient (B) to the content of ingredient A3 (content of ingredient (B)/ content of ingredient A3) as a molar ratio may be 0.1 to 0.2, 0.2 to 0.5, 0.5 to 1, 1 to 2, 2 to 5, or 5 to 10. Specifically, for example, the ratio of the content of ingredient (B) to the content of ingredient A3 (content of ingredient (B)/ content of ingredient A3) as a molar ratio may be 0.1 to 10, 0.2 to 5, or 0.5 to 2. In cases where the composition of the present invention comprises two or more ingredients A3, the contents of the two or more ingredients A3 may be set such that they independently satisfy, or their total satisfies, the above-exemplified ratio of the content of ingredient (B) to the content of ingredient A3. However, in cases where the composition of the present invention comprises two or more ingredients A3, the "content of ingredient A3 in the composition of the present invention" means, unless otherwise specified, the total content of the two or more ingredients A3 in the composition of the present invention.

The content of each active ingredient in the composition of the present invention may be set, for example, such that the above-exemplified total content and the content ratios of the active ingredients are satisfied.

Further, the content of each active ingredient in the composition of the present invention may be set, for example, such that the concentration of each active ingredient is within a predetermined range when the composition of the present invention is used. The concentrations of the active ingredients at the time of use of the composition of the present invention are also referred to as "use concentrations of the active ingredients" or "application concentrations of the active ingredients." The use concentrations of the active ingredients may be, in particular, concentrations in a case where the composition of the present invention is used in the form of a liquid.

The use concentrations of the active ingredients are not particularly limited as long as desired effects such as heat stress tolerance-inducing effects can be obtained. The use concentrations of the active ingredients can be appropriately set according to various conditions such as the types of the active ingredients, the type of the plant, the cultivation method of the plant, the growth stage of the plant, the mode of the heat stress conditions, and the degree of the heat stress symptoms. The use concentrations of the active ingredients may be set, for example, to concentrations at which the plant can survive to a desired extent.

The use concentration of ingredient (A) may be, for example, not less than 5 nM, not less than 10 nM, not less than 20 nM, not less than 50 nM, not less than 100 nM, not less than 200 nM, not less than 500 nM, not less than 1 µM, not less than 2 µM, not less than 5 µM, not less than 10 µM, not less than 20 µM, not less than 50 µM, not less than 100 µM, not less than 200 µM, not less than 500 µM, not less than 1 mM, not less than 2 mM, not less than 5 mM, not less than 10 mM, not less than 20 mM, not less than 50 mM, or not less than 100 mM, and may be not more than 200 mM, not more than 100 mM, not more than 50 mM, not more than 20 mM, not more than 10 mM, not more than 5 mM, not more than 2 mM, not more than 1 mM, not more than 500 µM, not more than 200 µM, not more than 100 µM, not more than 50 µM, not more than 20 µM, not more than 10 µM, not more than 5 µM, not more than 2 µM, not more than 1 µM, not more than 500 nM, not more than 200 nM, not more than 100 nM, not more than 50 nM, not more than 20 nM, or not more than 10 nM, or may be within a range defined as a non-contradictory combination thereof. Specifically, the use concentration of ingredient (A) may be, for example, 5 nM to 10 nM, 10 nM to 20 nM, 20 nM to 50 nM, 50 nM to 100 nM, 100 nM to 200 nM, 200 nM to 500 nM, 500 nM to 1 µM, 1 µM to 2 µM, 2 µM to 5 µM, 5 µM to 10 µM, 10 µM to 20 µM, 20 µM to 50 µM, 50 µM to 100 µM, 100 µM to 200 µM, 200 µM to 500 µM, 500 µM to 1 mM, 1 mM to 2 mM, 2 mM to 5 mM, 5 mM to 10 mM, 10 mM to 20 mM, 20 mM to 50 mM, 50 mM to 100 mM, or 100 mM to 200 mM. In cases where two or more ingredients (A) are used, the use concentrations of the two or more ingredients (A) may be set such that the concentration of each ingredient independently, or their total thereof, fall within the above-exemplified range of the use concentration of ingredient (A). However, unless otherwise specified, in cases where two or more ingredients (A) are used, the "use concentration of ingredient (A)" means the total use concentration of the two or more ingredients (A).

In cases where at least ingredient A1 is used as ingredient (A), for example, the use concentration of ingredient A1 may be not less than 200 µM, not less than 500 µM, not less than 1 mM, not less than 2 mM, not less than 5 mM, not less than 10 mM, not less than 20 mM, not less than 50 mM, or not less than 100 mM, and may be not more than 200 mM, not more than 100 mM, not more than 50 mM, not more than 20 mM, not more than 10 mM, not more than 5 mM, not more than 2 mM, not more than 1 mM, or not more than 500 µM, or may be within a range defined as a non-contradictory combination thereof. Specifically, the use concentration of ingredient A1 may be, for example, 200 µM to 500 µM, 500 µM to 1 mM, 1 mM to 2 mM, 2 mM to 5 mM, 5 mM to 10 mM, 10 mM to 20 mM, 20 mM to 50 mM, 50 mM to 100 mM, or 100 mM to 200 mM. Specifically, the use concentration of ingredient A1 may be, for example, 200 µM to 200 mM, 500 µM to 100 mM, or 1 mM to 50 mM. In cases where two or more ingredients A1 are used, the use concentrations of the two or more ingredients A1 may be set such that the concentration of each ingredient independently, or their total thereof, fall within the above-exemplified range of the use concentration of ingredient A1. However, unless otherwise specified, in cases where two or more ingredients (A) are used, the "use concentration of ingredient A1" means the total use concentration of the two or more ingredients A1.

In cases where at least ingredient A2 is used as ingredient (A), the use concentration of ingredient A2 may be, for example, not less than 5 nM, not less than 10 nM, not less than 20 nM, not less than 50 nM, not less than 100 nM, not less than 200 nM, not less than 500 nM, not less than 1 µM, not less than 2 µM, not less than 5 µM, or not less than 10 µM, and may be not more than 20 µM, not more than 10 µM, not more than 5 µM, not more than 2 µM, not more than 1 µM, not more than 500 nM, not more than 200 nM, not more than 100 nM, not more than 50 nM, not more than 20 nM, or not more than 10 nM, or may be within a range defined as a non-contradictory combination thereof. Specifically, the use concentration of ingredient A2 may be, for example, 5 nM to 10 nM, 10 nM to 20 nM, 20 nM to 50 nM, 50 nM to 100 nM, 100 nM to 200 nM, 200 nM to 500 nM, 500 nM to 1 µM, 1 µM to 2 µM, 2 µM to 5 µM, 5 µM to 10 µM, or 10 µM to 20 µM. Specifically, the use concentration of ingredient A2 may be, for example, 5 nM to 5 µM, 10 nM to 2 µM, or 20 nM to 1 µM. In cases where two or more ingredients A2 are used, the use concentrations of the two or more ingredients A2 may be set such that the concentration of each ingredient independently, or their total thereof, fall within the above-exemplified range of the use concentration of ingredient A2. However, unless otherwise specified, in cases where two or more ingredients A2 are used, the "use concentration of ingredient A2" means the total use concentration of the two or more ingredients A2.

In cases where at least ingredient A3 is used as ingredient (A), the use concentration of ingredient A3 may be, for example, not less than 500 nM, not less than 1 µM, not less than 2 µM, not less than 5 µM, not less than 10 µM, not less than 20 µM, not less than 50 µM, not less than 100 µM, or not less than 200 µM, and may be not more than 500 µM, not more than 200 µM, not more than 100 µM, not more than 50 µM, not more than 20 µM, not more than 10 µM, not more than 5 µM, not more than 2 µM, or not more than 1 µM, or may be within a range defined as a non-contradictory combination thereof. Specifically, the use concentration of ingredient A3 may be, for example, 500 nM to 1 µM, 1 µM to 2 µM, 2 µM to 5 µM, 5 µM to 10 µM, 10 µM to 20 µM, 20 µM to 50 µM, 50 µM to 100 µM, 100 µM to 200 µM, or 200 µM to 500 µM. Specifically, the use concentration of ingredient A3 may be, for example, 500 nM to 100 µM, 1 µM to 50 µM, or 2 µM to 20 µM. In cases where two or more ingredients A3 are used, the use concentrations of the two or more ingredients A3 may be set such that the concentration of each ingredient independently, or their total thereof, fall within the above-exemplified range of the use concentration of ingredient A3. However, unless otherwise specified, in cases where two or more ingredients A3 are used, the "use concentration of ingredient A3" means the total use concentration of the two or more ingredients A3.

The use concentration of ingredient (B) may be, for example, not less than 500 nM, not less than 1 µM, not less than 2 µM, not less than 5 µM, not less than 10 µM, not less than 20 µM, not less than 50 µM, not less than 100 µM, or not less than 200 µM, and may be not more than 500 µM, not more than 200 µM, not more than 100 µM, not more than 50 µM, not more than 20 µM, not more than 10 µM, not more than 5 µM, not more than 2 µM, or not more than 1 µM, or may be within a range defined as a non-contradictory combination thereof. Specifically, the use concentration of ingredient (B) may be, for example, 500 nM to 1 µM, 1 µM to 2 µM, 2 µM to 5 µM, 5 µM to 10 µM, 10 µM to 20 µM, 20 µM to 50 µM, 50 µM to 100 µM, 100 µM to 200 µM, or 200 µM to 500 µM. Specifically, the use concentration of ingredient (B) may be, for example, 500 nM to 500 µM, 1 µM to 200 µM, or 2 µM to 100 µM. In cases where two or more ingredients (B) are used, the use concentrations of the two or more ingredients (B) may be set such that the concentration of each ingredient independently, or their total thereof, fall within the above-exemplified range of the use concentration of ingredient (B). However, unless otherwise specified, in cases where two or more ingredients (B) are used, the "use concentration of ingredient (B)" means the total use concentration of the two or more ingredients (B).

In cases where a material containing an active ingredient is used, the amount (for example, the content (concentration) or the amount used) of the active ingredient is calculated based on the amount of the active ingredient itself in the material. Further, in cases where an active ingredient is in the form of a salt or hydrate, the amount (for example, the content (concentration) or the amount used) of the active ingredient is calculated based on a value obtained by converting the mass of the salt or hydrate into the mass of an equimolar amount of a free form.

The active ingredients and the other ingredients may be mixed with each other and then included in the composition of the present invention. Alternatively, these may be individually included, or arbitrary combinations of these may be individually included, in the composition of the present invention. For example, the composition of the present invention may be provided as a set of ingredient (A) and ingredient (B) that are separately packaged. In such a case, ingredient (A) and ingredient (B) may be used in combination as appropriate to be applied to plants.

### <4> Method of the Present Invention

The method of the present invention is a method comprising applying active ingredients (that is, the above ingredients (A) and (B)) to plants. The method of the present invention can be carried out, for example, in order to obtain the effects exemplified above.

By carrying out the method of the present invention, specifically, by applying the active ingredients to plants, heat stress tolerance in the plants can be induced. In other words, the method of the present invention may be a method of inducing heat stress tolerance in plants. The induction of heat stress tolerance in the plants may be, for example, due to an increase in expression of genes involved in heat stress tolerance. Specifically, the method of the present invention (such as a method of inducing heat stress tolerance in plants) may be, for example, a method for improving plant growth, for increasing the plant yield, for suppressing plant death, for suppressing plant cell death, for increasing photosynthetic activity of plants, and/or for increasing the chlorophyll content in plant cells. Thus, the method of the present invention (for example, a method for inducing heat stress tolerance in plants) may be, for example, a method for increasing expression of genes involved in heat stress tolerance in plants.

The active ingredients may be applied to plants, for example, by using the composition of the present invention (in other words, by applying the composition of the present invention). In other words, one aspect of the method of the present invention may be, for example, a method comprising applying the composition of the present invention to plants. "Applying the active ingredients to plants" includes applying the composition of the present invention to plants. The composition of the present invention can be applied to plants, for example, as it is, or as appropriate, after being diluted, dispersed, or dissolved in a liquid such as water, physiological saline, a buffer, alcohol, or DMSO. In other words, the composition of the present invention can be applied to plants, for example, as appropriate, after adjusting the concentration such that the above-exemplified use concentrations of the active ingredients are achieved. In particular, the composition of the present invention can be applied in the form of a liquid to plants. The active ingredients may be applied in a pre-mixed state to plants, or may be separately applied to plants. In other words, for example, in cases where the active ingredients are mixed with each other and contained in the composition of the present invention, the active ingredients can be applied in a pre-mixed state to plants by applying the composition of the present invention to the plants. Further, for example, in cases where the active ingredients are contained in the composition of the present invention separately from each other, the active ingredients may be applied to plants after being mixed with each other, or may be separately applied to plants. In cases where the active ingredients are applied to plants separately from each other, the active ingredients may or may not be applied to the plants simultaneously. In cases where the active ingredients are not applied to the plants simultaneously, the order of application of ingredient (A) and ingredient (B) is not particularly limited. For example, ingredient (A) may be applied first, or ingredient (B) may be applied first. For example, in particular, ingredient (A) may be applied first. In cases where the active ingredients are not applied to the plants simultaneously, the interval between the application of ingredient (A) and the application of ingredient (B) is not particularly limited as long as desired effects such as heat stress tolerance-inducing effects can be obtained. The interval between the application of ingredient (A) and the application of ingredient (B) may be, for example, not more than 50 days, not more than 30 days, not more than 20 days, not more than 15 days, not more than 10 days, not more than 7 days, not more than 5 days, not more than 3 days, or not more than 1 day. The composition of the present invention may also be used in combination with other ingredients. Regarding the other ingredients, the descriptions of ingredients other than the active ingredients in the description of the composition of the present invention may be applied mutatis mutandis. In other words, the composition of the present invention may be used in combination with, for example, an additive such as a spreading agent.

The method of application of the composition of the present invention is not particularly limited as long as desired effects such as heat stress tolerance-inducing effects can be obtained. The method of application of the composition of the present invention can be appropriately selected according to various conditions such as the types of the active ingredients, the type of the plants, the cultivation method of the plants, the growth stage of the plants, the mode of the heat stress conditions, and the degree of the heat stress symptoms. The composition of the present invention can be applied to plants, for example, by an ordinary method for applying an agricultural chemical or a fertilizer to plants. The composition of the present invention can be applied to plants, for example, by an ordinary method for applying an agricultural chemical or a fertilizer to plants. The composition of the present invention may be applied, for example, to the plants themselves, to a medium in which the plants are cultivated, or to a combination thereof. The phrase "applying the active ingredients to plants" is not limited to applying the composition of the present invention to the plants themselves, and includes applying the composition of the present invention to a medium in which the plants are cultivated. The medium in which the plants are cultivated is also referred to as a "growth medium" or a "growth system." The growth medium can be appropriately selected according to various conditions such as the type of the plants and the cultivation method of the plants. The cultivation method of the plants is not particularly limited. The plant can be cultivated, for example, by the same method as an ordinary method for cultivating plants except that the composition of the present invention is applied. Examples of cultivation methods of the plants include soil cultivation, nutrient solution cultivation, and soil cultivation with a nutrient solution. Examples of nutrient solution cultivation include hydroponics and solid culture medium cultivation. Examples of hydroponics include the nutrient film technique (NFT) and the deep flow technique (DFT). That is, examples of media in which the plants are cultivated (growth medium) include soil, cultivation solutions for hydroponics, and solid cultivation media. Examples of applications to the plants themselves include spraying or coating onto the plants, and immersion of the plants. The composition of the present invention may be applied to the whole plant, or may be applied to a part of the plant. For example, in cases where the plant is a plant body, the composition of the present invention may be applied to the whole plant body, or may be applied to a part of the plant body. The composition of the present invention may be applied, for example, to the whole aboveground part of the plant body. Examples of parts of the plant body include a leaf, a stem, a trunk, a root, a fruit, and a seed. Examples of parts of the plant body include, in particular, a leaf. In cases where the composition of the present invention is applied to a leaf, the composition of the present invention may be applied to only one of the front surface and the back surface of the leaf, or may be applied to both. Specific examples of applications to the plant body include foliar spraying and root immersion. Examples of applications to the growth medium include spraying onto the growth medium, drench application to the growth medium, and mixing with the growth medium. Specifically, for example, the composition of the present invention may be applied (for example, sprayed) to the growth medium through an irrigation tube. The application to the growth medium may be carried out such that the active ingredients reach a position where the active ingredients can act on the plant. For example, the application to the medium in which the plants are cultivated may be carried out such that the active ingredients reach the rhizosphere of the plants.

The timing of application of the composition of the present invention is not particularly limited as long as desired effects such as heat stress tolerance-inducing effects can be obtained. The timing of application of the composition of the present invention can be appropriately selected according to various conditions such as the types of the active ingredients, the type of the plants, the cultivation method of the plants, the growth stage of the plants, the mode of the heat stress conditions, and the degree of the heat stress symptoms. The composition of the present invention can be applied to plants, for example, before occurrence of heat stress symptoms. By applying the composition of the present invention to plants before occurrence of heat stress symptoms, for example, heat stress symptoms that may occur in the future may be able to be alleviated. Further, the composition of the present invention may also be applied to plants, for example, after occurrence of heat stress symptoms. By applying the composition of the present invention to plants after occurrence of heat stress symptoms, for example, heat stress symptoms that have already occurred may be able to be alleviated. The composition of the present invention may be applied, for example, before the completion of the vegetative growth stage of the plants. The composition of the present invention may also be applied, for example, before the completion of the reproductive stage (specifically, formation of pollen) of the plants. The composition of the present invention may also be applied, for example, after the start of flowering of the plants. In cases where the active ingredients are applied separately to plants, for example, ingredient (A) may be applied before the completion of the vegetative growth stage of the plants, and ingredient (B) may be applied before the completion of the reproductive stage (specifically, formation of pollen) of the plants. The composition of the present invention may be applied only once, or may be applied twice or more. The composition of the present invention may be applied intermittently, or may be applied continuously.

The applied amount of the composition of the present invention is not particularly limited as long as desired effects such as heat stress tolerance-inducing effects can be obtained. The applied amount of the composition of the present invention can be appropriately selected according to various conditions such as the types of the active ingredients, the type of the plants, the cultivation method of the plants, the growth stage of the plants, the mode of the heat stress conditions, the degree of the heat stress symptoms, and the application method and the application timing of the composition of the present invention.

The applied amount of the composition of the present invention, for example, as the applied amount of the composition of the present invention in the form of a liquid (such as the composition of the present invention in the form of a liquid comprising the active ingredients at the above-exemplified use concentrations) may be not less than 100 L/ha, not less than 200 L/ha, not less than 500 L/ha, not less than 1000 L/ha, not less than 1500 L/ha, not less than 2000 L/ha, not less than 3000 L/ha, not less than 4000 L/ha, not less than 5000 L/ha, not less than 7000 L/ha, not less than 10,000 L/ha, not less than 30,000 L/ha, not less than 50,000 L/ha, not less than 70,000 L/ha, not less than 100,000 L/ha, not less than 150,000 L/ha, not less than 200,000 L/ha, not less than 300,000 L/ha, not less than 500,000 L/ha, or not less than 750,000 L/ha, and may be not more than 1,000,000 L/ha, not more than 750,000 L/ha, not more than 500,000 L/ha, not more than 300,000 L/ha, not more than 200,000 L/ha, not more than 150,000 L/ha, not more than 100,000 L/ha, not more than 70,000 L/ha, not more than 50,000 L/ha, not more than 30,000 L/ha, not more than 10,000 L/ha, not more than 9000 L/ha, not more than 8000 L/ha, not more than 7000 L/ha, not more than 6000 L/ha, not more than 5000 L/ha, not more than 4000 L/ha, not more than 3000 L/ha, not more than 2000 L/ha, or not more than 1500 L/ha, or may be within a range defined as a non-contradictory combination thereof. The applied amount of the composition of the present invention, specifically, for example, as the applied amount of the composition of the present invention in the form of a liquid (such as the composition of the present invention in the form of a liquid comprising the active ingredients at the above-exemplified use concentrations) may be 100 L/ha to 1500 L/ha, 1500 L/ha to 5000 L/ha, 5000 L/ha to 10,000 L/ha, 10,000 L/ha to 30,000 L/ha, 30,000 L/ha to 50,000 L/ha, 50,000 L/ha to 100,000 L/ha, 100,000 L/ha to 150,000 L/ha, 150,000 L/ha to 200,000 L/ha, 200,000 L/ha to 500,000 L/ha, or 500,000 L/ha to 10,000,000 L/ha. The applied amount of the composition of the present invention, specifically, for example, as the applied amount of the composition of the present invention in the form of a liquid (such as the composition of the present invention in the form of a liquid comprising the active ingredients at the above-exemplified use concentrations) may be 100 L/ha to 1,000,000 L/ha, 200 L/ha to 1,000,000 L/ha, 500 L/ha to 1,000,000 L/ha, 1000 L/ha to 750,000 L/ha, 10,000 L/ha to 750,000 L/ha, or 100,000 L/ha to 750,000 L/ha.

Further, the applied amount of the composition of the present invention can also be set in consideration of not only the application area (two-dimensional factor), but also a three-dimensional factor. In other words, the applied amount of the composition of the present invention can be set, for example, according to the height of the plants to which the composition of the present invention is applied (for example, sprayed). The applied amount of the composition of the present invention, specifically, for example, as the applied amount of the composition of the present invention in the form of a liquid (such as the composition of the present invention in the form of a liquid comprising the active ingredients at the above-exemplified use concentrations) may be, for plants ranging in height from the ground level to knee height, 1000 L/ha to 750,000 L/ha, 1000 L/ha to 30,000 L/ha, 1000 L/ha to 5000 L/ha, or 1000 L/ha to 1500 L/ha. The applied amount of the composition of the present invention, specifically, for example, as the applied amount of the composition of the present invention in the form of a liquid (such as the composition of the present invention in the form of a liquid comprising the active ingredients at the above-exemplified use concentrations) may be, for plants ranging in height from knee height to a person's height, 1500 L/ha to 750,000 L/ha, 1500 L/ha to 70,000 L/ha, 1500 L/ha to 10,000 L/ha, or 1500 L/ha to 3000 L/ha. The applied amount of the composition of the present invention, specifically, for example, as the applied amount of the composition of the present invention in the form of a liquid (such as the composition of the present invention in the form of a liquid comprising the active ingredients at the above-exemplified use concentrations) may be, for plants having a height from a person's height to 2 meters, 3000 L/ha to 750,000 L/ha, 3000 L/ha to 100,000 L/ha, 3000 L/ha to 30,000 L/ha, or 3000 L/ha to 5000 L/ha. The applied amount of the composition of the present invention, specifically, for example, as the applied amount of the composition of the present invention in the form of a liquid (such as the composition of the present invention in the form of a liquid comprising the active ingredients at the above-exemplified use concentrations) may be, for plants having a height of 2 meters or more, 5000 L/ha to 750,000 L/ha, 5000 L/ha to 150,000 L/ha, 5000 L/ha to 30,000 L/ha, or 5000 L/ha to 7000 L/ha.

In cases where the composition of the present invention is applied to a growth medium (for example, by drench application to the ground surface), the applied amount of the composition of the present invention, specifically, for example, as the applied amount of the composition of the present invention in the form of a liquid (such as the composition of the present invention in the form of a liquid comprising the active ingredients at the above-exemplified use concentrations) may be 250,000 L/ha to 750,000 L/ha.

The composition of the present invention may be applied only once, or may be applied in a plurality of divided applications. The composition of the present invention may be applied, for example, in 2 or more, 3 or more, 5 or more, or 10 or more divided applications. In cases where the composition of the present invention is applied in a plurality of divided applications, the "applied amount of the composition of the present invention" means the total applied amount of the composition of the present invention by the plurality of applications.

Further, the applied amount of the composition of the present invention can be set, for example, such that the applied amount of each active ingredient is within a predetermined range.

The applied amount of ingredient (A) may be, for example, not less than 10 µmol/ha, not less than 20 µmol/ha, not less than 50 µmol/ha, not less than 100 µmol/ha, not less than 200 µmol/ha, not less than 500 µmol/ha, not less than 1 mmol/ha, not less than 2 mmol/ha, not less than 5 mmol/ha, not less than 10 mmol/ha, not less than 20 mmol/ha, not less than 50 mmol/ha, not less than 100 mmol/ha, not less than 200 mmol/ha, not less than 500 mmol/ha, not less than 1 mol/ha, not less than 2 mol/ha, not less than 5 mol/ha, not less than 10 mol/ha, not less than 20 mol/ha, not less than 50 mol/ha, not less than 100 mol/ha, or not less than 200 mol/ha, and may be not more than 500 mol/ha, not more than 200 mol/ha, not more than 100 mol/ha, not more than 50 mol/ha, not more than 20 mol/ha, not more than 10 mol/ha, not more than 5 mol/ha, not more than 2 mol/ha, not more than 1 mol/ha, not more than 500 mmol/ha, not more than 200 mmol/ha, not more than 100 mmol/ha, not more than 50 mmol/ha, not more than 20 mmol/ha, not more than 10 mmol/ha, not more than 5 mmol/ha, not more than 2 mmol/ha, not more than 1 mmol/ha, not more than 500 µmol/ha, not more than 200 µmol/ha, not more than 100 µmol/ha, not more than 50 µmol/ha, or not more than 20 µmol/ha, or may be within a range defined as a non-contradictory combination thereof. The applied amount of ingredient (A) may specifically be, for example, 10 µmol/ha to 20 µmol/ha, 20 µmol/ha to 50 µmol/ha, 50 µmol/ha to 100 µmol/ha, 100 µmol/ha to 200 µmol/ha, 200 µmol/ha to 500 µmol/ha, 500 µmol/ha to 1 mmol/ha, 1 mmol/ha to 2 mmol/ha, 2 mmol/ha to 5 mmol/ha, 5 mmol/ha to 10 mmol/ha, 10 mmol/ha to 20 mmol/ha, 20 mmol/ha to 50 mmol/ha, 50 mmol/ha to 100 mmol/ha, 100 mmol/ha to 200 mmol/ha, 200 mmol/ha to 500 mmol/ha, 500 mmol/ha to 1 mol/ha, 1 mol/ha to 2 mol/ha, 2 mol/ha to 5 mol/ha, 5 mol/ha to 10 mol/ha, 10 mol/ha to 20 mol/ha, 20 mol/ha to 50 mol/ha, 50 mol/ha to 100 mol/ha, 100 mol/ha to 200 mol/ha, or 200 mol/ha to 500 mol/ha. In cases where two or more ingredients (A) are used, the applied amounts of the two or more ingredients (A) may be set such that the applied amount of each ingredient independently, or their total thereof, fall within the above-exemplified range of the applied amount of ingredient (A). However, unless otherwise specified, in cases where two or more ingredients (A) are used, the "applied amount of ingredient (A)" means the total applied amount of the two or more ingredients (A). In cases where the composition of the present invention is applied in a plurality of divided applications, the "applied amount of ingredient (A)" means the total applied amount of ingredient (A) by the plurality of applications.

In cases where at least ingredient A1 is used as ingredient (A), for example, the applied amount of ingredient A1 may be not less than 500 mmol/ha, not less than 1 mol/ha, not less than 2 mol/ha, not less than 5 mol/ha, not less than 10 mol/ha, not less than 20 mol/ha, not less than 50 mol/ha, not less than 100 mol/ha, or not less than 200 mol/ha, and may be not more than 500 mol/ha, not more than 200 mol/ha, not more than 100 mol/ha, not more than 50 mol/ha, not more than 20 mol/ha, not more than 10 mol/ha, not more than 5 mol/ha, not more than 2 mol/ha, or not more than 1 mol/ha, or may be within a range defined as a non-contradictory combination thereof. The applied amount of ingredient A1 may specifically be, for example, 500 mmol/ha to 1 mol/ha, 1 mol/ha to 2 mol/ha, 2 mol/ha to 5 mol/ha, 5 mol/ha to 10 mol/ha, 10 mol/ha to 20 mol/ha, 20 mol/ha to 50 mol/ha, 50 mol/ha to 100 mol/ha, 100 mol/ha to 200 mol/ha, or 200 mol/ha to 500 mol/ha. The applied amount of ingredient A1 may specifically be, for example, 500 mmol/ha to 500 mol/ha, 1 mol/ha to 100 mol/ha, or 2 mol/ha to 20 mol/ha. In cases where two or more ingredients A1 are used, the applied amounts of the two or more ingredients A1 may be set such that the applied amount of each ingredient independently, or their total thereof, fall within the above-exemplified range of the applied amount of ingredient A1. However, unless otherwise specified, in cases where two or more ingredients A1 are used, the "applied amount of ingredient A1" means the total applied amount of the two or more ingredients A1. In cases where the composition of the present invention is applied in a plurality of divided applications, the "applied amount of ingredient A1" means the total applied amount of ingredient A1 by the plurality of applications.

In cases where at least ingredient A2 is used as ingredient (A), for example, the applied amount of ingredient A2 may be not less than 10 µmol/ha, not less than 20 µmol/ha, not less than 50 µmol/ha, not less than 100 µmol/ha, not less than 200 µmol/ha, not less than 500 µmol/ha, not less than 1 mmol/ha, not less than 2 mmol/ha, not less than 5 mmol/ha, not less than 10 mmol/ha, or not less than 20 mmol/ha, and may be not more than 50 mmol/ha, not more than 20 mmol/ha, not more than 10 mmol/ha, not more than 5 mmol/ha, not more than 2 mmol/ha, not more than 1 mmol/ha, not more than 500 µmol/ha, not more than 200 µmol/ha, not more than 100 µmol/ha, not more than 50 µmol/ha, or not more than 20 µmol/ha, or may be within a range defined as a non-contradictory combination thereof. The applied amount of ingredient A2 may specifically be, for example, 10 µmol/ha to 20 µmol/ha, 20 µmol/ha to 50 µmol/ha, 50 µmol/ha to 100 µmol/ha, 100 µmol/ha to 200 µmol/ha, 200 µmol/ha to 500 µmol/ha, 500 µmol/ha to 1 mmol/ha, 1 mmol/ha to 2 mmol/ha, 2 mmol/ha to 5 mmol/ha, 5 mmol/ha to 10 mmol/ha, 10 mmol/ha to 20 mmol/ha, or 20 mmol/ha to 50 mmol/ha. The applied amount of ingredient A2 may specifically be, for example, 10 µmol/ha to 10 mmol/ha, 20 µmol/ha to 5 mmol/ha, or 50 µmol/ha to 2 mmol/ha. In cases where two or more ingredients A2 are used, the applied amounts of the two or more ingredients A2 may be set such that the applied amount of each ingredient independently, or their total thereof, fall within the above-exemplified range of the applied amount of ingredient A2. However, unless otherwise specified, in cases where two or more ingredients A2 are used, the "applied amount of ingredient A2" means the total applied amount of the two or more ingredients A2. In cases where the composition of the present invention is applied in a plurality of divided applications, the "applied amount of ingredient A2" means the total applied amount of ingredient A2 by the plurality of applications.

In cases where at least ingredient A3 is used as ingredient (A), for example, the applied amount of ingredient A3 may be not less than 1 mmol/ha, not less than 2 mmol/ha, not less than 5 mmol/ha, not less than 10 mmol/ha, not less than 20 mmol/ha, not less than 50 mmol/ha, not less than 100 mmol/ha, not less than 200 mmol/ha, or not less than 500 mmol/ha, and may be not more than 1 mol/ha, not more than 500 mmol/ha, not more than 200 mmol/ha, not more than 100 mmol/ha, not more than 50 mmol/ha, not more than 20 mmol/ha, not more than 10 mmol/ha, not more than 5 mmol/ha, or not more than 2 mmol/ha, or may be within a range defined as a non-contradictory combination thereof. The applied amount of ingredient A3 may specifically be, for example, 1 mmol/ha to 2 mmol/ha, 2 mmol/ha to 5 mmol/ha, 5 mmol/ha to 10 mmol/ha, 10 mmol/ha to 20 mmol/ha, 20 mmol/ha to 50 mmol/ha, 50 mmol/ha to 100 mmol/ha, 100 mmol/ha to 200 mmol/ha, 200 mmol/ha to 500 mmol/ha, or 500 mmol/ha to 1 mol/ha. The applied amount of ingredient A3 may specifically be, for example, 1 mmol/ha to 200 mmol/ha, 2 mmol/ha to 100 mmol/ha, or 5 mmol/ha to 50 mmol/ha. In cases where two or more ingredients A3 are used, the applied amounts of the two or more ingredients A3 may be set such that the applied amount of each ingredient independently, or their total thereof, fall within the above-exemplified range of the applied amount of ingredient A3. However, unless otherwise specified, in cases where two or more ingredients A3 are used, the "applied amount of ingredient A3" means the total applied amount of the two or more ingredients A3. In cases where the composition of the present invention is applied in a plurality of divided applications, the "applied amount of ingredient A3" means the total applied amount of ingredient A3 by the plurality of applications.

The applied amount of ingredient (B) may be, for example, not less than 1 mmol/ha, not less than 2 mmol/ha, not less than 5 mmol/ha, not less than 10 mmol/ha, not less than 20 mmol/ha, not less than 50 mmol/ha, not less than 100 mmol/ha, not less than 200 mmol/ha, or not less than 500 mmol/ha, and may be not more than 1 mol/ha, not more than 500 mmol/ha, not more than 200 mmol/ha, not more than 100 mmol/ha, not more than 50 mmol/ha, not more than 20 mmol/ha, not more than 10 mmol/ha, not more than 5 mmol/ha, or not more than 2 mmol/ha, or may be within a range defined as a non-contradictory combination thereof. The applied amount of ingredient (B) may specifically be, for example, 1 mmol/ha to 2 mmol/ha, 2 mmol/ha to 5 mmol/ha, 5 mmol/ha to 10 mmol/ha, 10 mmol/ha to 20 mmol/ha, 20 mmol/ha to 50 mmol/ha, 50 mmol/ha to 100 mmol/ha, 100 mmol/ha to 200 mmol/ha, 200 mmol/ha to 500 mmol/ha, or 500 mmol/ha to 1 mol/ha. The applied amount of ingredient (B) may specifically be, for example, 1 mmol/ha to 1 mol/ha, 2 mmol/ha to 200 mmol/ha, or 5 mmol/ha to 50 mmol/ha. In cases where two or more ingredients (B) are used, the applied amounts of the two or more ingredients (B) may be set such that the applied amount of each ingredient independently, or their total thereof, fall within the above-exemplified range of the applied amount of ingredient (B). However, unless otherwise specified, in cases where two or more ingredients (B) are used, the "applied amount of ingredient (B)" means the total applied amount of the two or more ingredients (B). In cases where the composition of the present invention is applied in a plurality of divided applications, the "applied amount of ingredient (B)" means the total applied amount of ingredient (B) by the plurality of applications.

The applied amount of the composition of the present invention exemplified above may be, in particular, an applied amount in a case where the composition of the present invention is applied to plants by spraying (for example, foliar spraying) onto plant bodies, or by spraying onto a medium in which the plants are cultivated.

The descriptions regarding the mode of application of the composition of the present invention as described above may also be applied mutatis mutandis to any other cases where the active ingredients are applied to plants. Specifically, the active ingredients may be applied to plants, for example, at the use concentrations exemplified above. The active ingredients may also be applied to plants, for example, at the applied amounts of the active ingredients exemplified above. The active ingredients may also be, for example, prepared as a composition such as a liquid composition comprising the active ingredients, and applied to plants. Regarding the composition comprising the active ingredients, the description of the composition of the present invention may be applied mutatis mutandis. The active ingredients may be applied to plants, in particular, in the form of a liquid. Specifically, the active ingredients may be, for example, prepared as a liquid composition comprising the active ingredients at the use concentrations exemplified above, and applied to plants. The active ingredients may be applied in a pre-mixed state to plants, or may be separately applied to plants. Specifically, for example, a composition such as a liquid composition comprising both ingredient (A) and ingredient (B) may be prepared and applied to plants. Further, for example, a composition such as a liquid composition comprising ingredient (A) and a composition such as a liquid composition comprising ingredient (B) may be separately prepared and applied to plants. The active ingredients may also be used, for example, in combination with other ingredient such as a spreading agent.

The plants may be cultivated under heat stress conditions. Performing cultivation of plants under heat stress conditions is also referred to as "exposing plants to heat stress" or "subjecting plants to a heat treatment." The plants may be cultivated under heat stress conditions throughout the entire period, or may be cultivated under heat stress conditions only in a part of the period. The phrase "plants are cultivated under heat stress conditions" means that the plants only need to be cultivated under heat stress conditions at least during a part of the period, and does not require cultivation of the plants under heat stress conditions throughout the entire period. The term "heat stress conditions" may mean conditions under which heat stress symptoms are induced in plants in the absence of use of the active ingredients. Examples of heat stress conditions include conditions where plants are cultivated at a temperature higher than a normal cultivation temperature of the plants, under which, when the active ingredients have not been used, growth of the plants is impaired compared to a case where the plants are cultivated at the normal cultivation temperature. The phrase "growth is impaired" may mean, for example, that, when plants are cultivated under heat stress conditions, the degree of growth (for example, the amount of growth or the growth rate) of the plants decreases to not more than 90%, not more than 70%, not more than 50%, not more than 30%, not more than 20%, or not more than 10% compared to a case where the plants are cultivated at a normal cultivation temperature, and also includes a case where no growth of the plants is observed at all. The cultivation temperature of the plants under heat stress conditions may be, for example, a temperature higher than a normal cultivation temperature of the plants by 3 to 20°C, 5 to 15°C, or 7 to 12°C. An example of normal cultivation temperature of the plants includes the optimum growth temperature of the plants. The heat treatment may be performed only once, or may be performed intermittently two or more times. The heat treatment may be performed intentionally, or may be performed unintentionally. The heat treatment may typically be performed unintentionally. For example, heat stress conditions may be naturally achieved in accordance with a natural environment such as weather or season, whereby the heat treatment may be performed unintentionally.

The duration of the heat treatment, per treatment or in total, may be, for example, not less than 3 hours, not less than 6 hours, not less than 12 hours, not less than 1 day, not less than 2 days, not less than 3 days, not less than 5 days, not less than 7 days, not less than 10 days, not less than 15 days, not less than 20 days, or not less than 30 days, and may be not more than 50 days, not more than 30 days, not more than 20 days, not more than 15 days, not more than 10 days, not more than 7 days, not more than 5 days, not more than 3 days, not more than 2 days, not more than 1 day, not more than 12 hours, or not more than 6 hours, or may be within a range defined as a non-contradictory combination thereof. Specifically, the duration of the heat treatment, per treatment or in total, may be, for example, 3 hours to 6 hours, 6 hours to 12 hours, 12 hours to 1 day, 1 day to 2 days, 2 days to 3 days, 3 days to 5 days, 5 days to 7 days, 7 days to 10 days, 10 days to 15 days, 15 days to 20 days, 20 days to 30 days, or 30 days to 50 days.

Further, the heat treatment may be carried out for a predetermined period of time per day, continuously or intermittently for a predetermined number of days. The predetermined period of time may be, for example, not less than 1 hour, not less than 3 hours, not less than 6 hours, not less than 9 hours, or not less than 12 hours per day, and may be not more than 18 hours, not more than 12 hours, not more than 9 hours, not more than 6 hours, or not more than 3 hours, or may be within a range defined as a non-contradictory combination thereof. Specifically, the predetermined period of time may be, for example, 1 hour to 3 hours per day, 3 hours to 6 hours per day, 6 hours to 9 hours per day, 9 hours to 12 hours per day, or 12 hours to 18 hours per day. Specifically, the predetermined period of time may be, for example, 1 hour to 12 hours per day, or 3 hours to 6 hours per day. The predetermined number of days may be, for example, not less than 1 day, not less than 2 days, not less than 3 days, not less than 5 days, not less than 7 days, not less than 10 days, not less than 15 days, not less than 20 days, or not less than 30 days, and may be not more than 50 days, not more than 30 days, not more than 20 days, not more than 15 days, not more than 10 days, not more than 7 days, not more than 5 days, not more than 3 days, or not more than 2 days, or may be within a range defined as a non-contradictory combination thereof. Specifically, the predetermined number of days may be, for example, 1 day to 50 days, 3 days to 20 days, or 5 days to 15 days.

By cultivating a plant using the method of the present invention, a plant (specifically, a plant body) is obtained. Thus, one aspect of the method of the present invention may be a method of producing a plant (specifically, a plant body). More specifically, one aspect of the method of the present invention may be a method of producing a plant (specifically, a plant body), comprising applying the active ingredients (that is, the above-described ingredients (A) and (B)) to a plant and cultivating the plant. The cultivation method of the plant is not particularly limited. The plant can be cultivated by, for example, the same method as a conventional method of cultivating a plant except that the active ingredients are applied. The cultivation method of the plant is as described above. The plant (specifically, the plant body) can be harvested as appropriate. Specifically, the method of the present invention may further comprise harvesting the plant (specifically, the plant body). The term "harvesting" may be used interchangeably with "collecting." The term "harvesting or collecting a plant" may be used interchangeably with "harvesting or collecting a plant body." The plant (specifically, the plant body) to be harvested may be the whole plant body, or may be a part of the plant body. Examples of parts of the plant body include a leaf, a stem, a trunk, a root, a fruit, and a seed. Examples of parts of the plant body include, in particular, a fruit.

### <5> Use of Active Ingredients

The present invention also discloses use of active ingredients for use in the above-exemplified applications. Specifically, the present invention discloses, for example, use of active ingredients for inducing heat stress tolerance in plants, and use of active ingredients in the production of a composition for inducing heat stress tolerance in plants.

The present invention also discloses active ingredients for use in the above-exemplified applications. Specifically, the present invention discloses, for example, active ingredients for use in inducing heat stress tolerance in plants, and active ingredients for use in the production of a composition for inducing heat stress tolerance in plants.

The present invention also discloses use of each active ingredient for use in the combination with another active ingredient. Specifically, the present invention discloses, for example, use of ingredient (A) for use in the combination with ingredient (B), and use of ingredient (B) for use in the combination with ingredient (A). Each active ingredient may be used in combination with another active ingredient for uses in the above-exemplified applications.

### EXAMPLES

The present invention is described below more specifically by way of non-limiting Examples. The valine (Val) used in the following experiments was L-valine.

### Example 1 Evaluation of Heat Stress Tolerance-Inducing Effect of Val, IAA, and Val & IAA

In the present Example, Val (valine) and IAA (indole-3-acetic acid) were applied to tomato either alone or in combination, and heat stress tolerance-inducing effects were evaluated.

### Experimental Materials

### Tomato: cultivar Regina

### Plant Cultivation

Two tomato seeds were sown in a pot (Sakata) having a soil diameter of 10.5 cm and containing 350 g of a mixed soil of potting soil (Kumiai No. 1) and vermiculite (potting soil:vermiculite = 3:1 (v:v)). Two weeks later, the tomato plants were thinned to leave one plant. The remaining tomato plant was cultivated in a biotron under the temperature and light conditions shown in Table 2. Thirty-five days after the sowing, soil fertilization was performed with 100 mL of a 500-fold diluted Hyponex solution. Water supplementation was performed as appropriate.

### Material Treatment and Heat Treatment

The six treatment groups shown in Table 1 were evaluated. The non-heat stress treatment + water treatment group (No. 1) was used as a positive control. The heat stress treatment groups included five treatment groups (Nos. 2 to 6). Growth stages and cultivation conditions of the tomato plants are shown in Table 2. The material treatment and the heat treatment were performed in two separate sets. The first set of material treatment was performed 40 days after the sowing, when flowering of the tomato plants had started. The second set of material treatment was performed 46 days after the sowing. The material treatment was performed by preparing an aqueous material solution containing 0.1% spreading agent "Approach BI", and performing foliar spraying. To each tomato plant, 6 mL of the aqueous material solution was sprayed. Twenty-four hours after the material treatment, the heat treatment was started, and the treatment was continued for 5 days for each set. In the heat treatment, to simulate near-natural conditions, temperature conditions were set such that the temperature gradually increased to reach a maximum temperature of 35°C and then gradually decreased. After the completion of the second set of heat treatment, the tomato plants were cultivated at room temperature for additional 14 days.

**[Table 1]**

| Table 1. Treatment groups | | |
|---|---|---|
| No. | Treatments | |
| 1 | Non-HS* | Water |
| 2 | | Water |
| 3 | | Val 5 mM |
| 4 | HS | Val 10 mM |
| 5 | | IAA 10 µM |
| 6 | | Val 5 mM & IAA 10 µM |

| | | |
|---|---|---|
| *HS, heat stress | | |

**[Table 2]**

| Table 2. Growth stages and cultivation conditions of tomato plants | | |
|---|---|---|
| Days after sowing | Temperature condition | Temperature and light |
| 0 day~ | Normal temperature | 6:00~18:00 25°C/ light; 18:00~6:00 20°C/ dark |
| 40 days~ | Normal temperature (Material treatment) | |
| 41 days~ | Heat stress | 6:00~10:00 25°C; 10:00~12:00 28°C; 12:00~16:00 35°C; 16:00~18:00 28°C/ light; 18:00~6:00 25°C/ dark |
| 46 days~ | Normal temperature (Material treatment) | 6:00~18:00 25°C/ light; 18:00~6:00 20°C/ dark |
| 47 days~ | Heat stress | Same as 41 days~ |
| 52 days~66 days | Normal temperature | 6:00~18:00 25°C/ light; 18:00~6:00 20°C/ dark |

### Fruit Examination

During the period from the material treatment in the first set to the completion of cultivation, the number of tomato fruits was examined.

### Results and Discussion

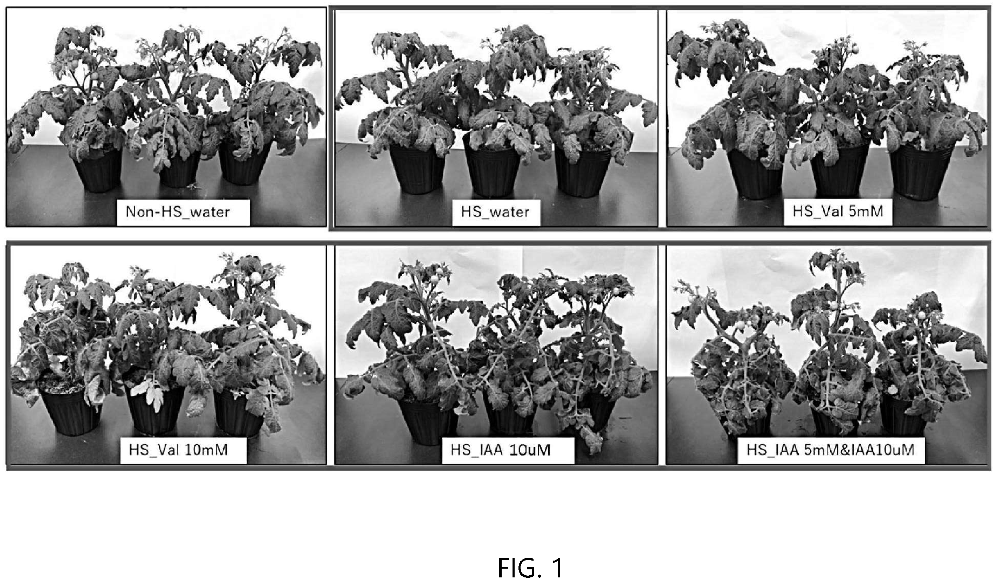

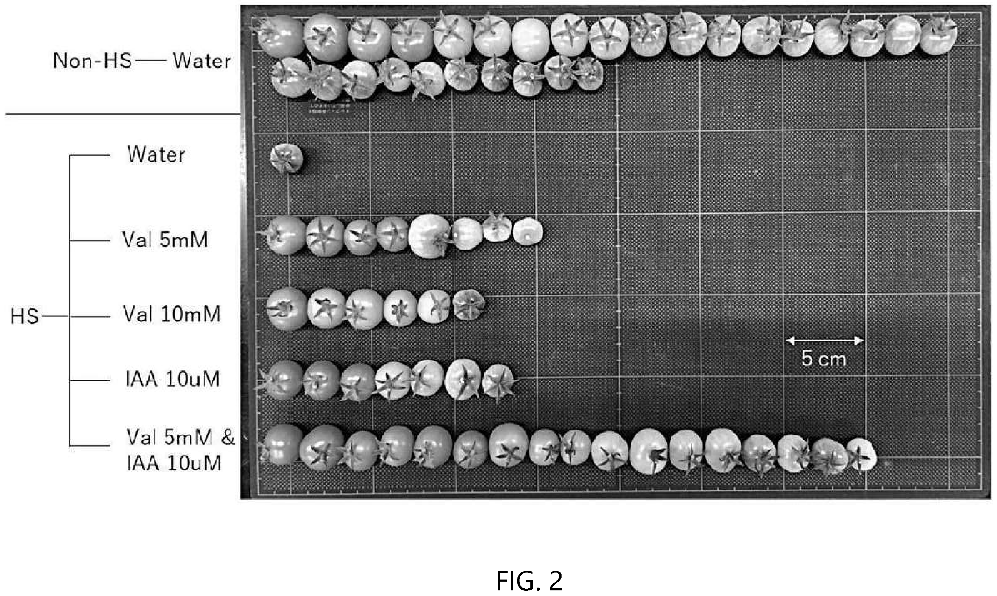

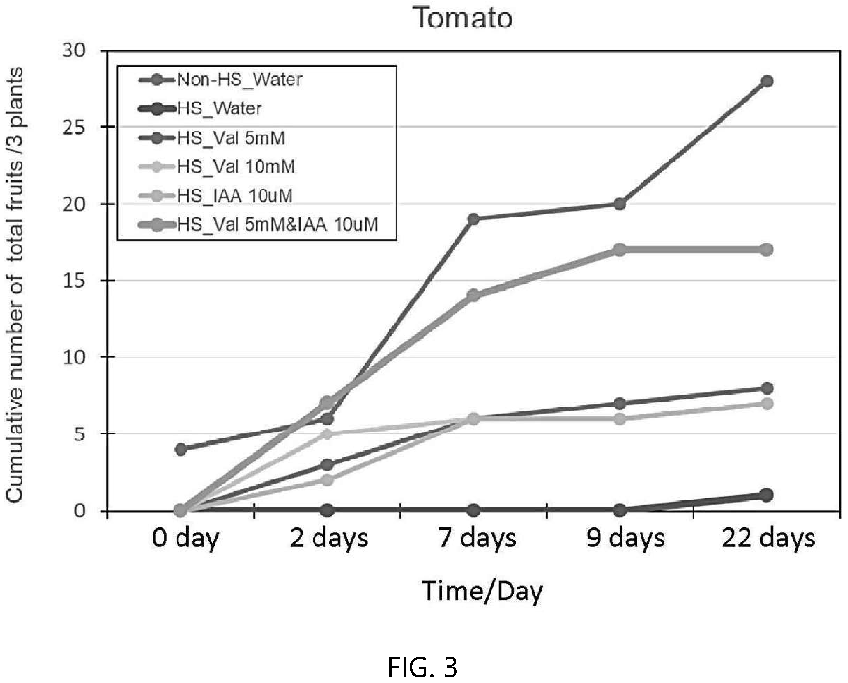

Fig. 1 shows the state of tomato plants immediately before harvesting. Fig. 2 shows harvested tomato fruits. Fig. 3 shows the cumulative number of tomato fruits. There was no large difference in the state of the tomato plants among the treatment groups (Fig. 1). On the other hand, the number of tomato fruits was markedly decreased in the heat stress treatment + water treatment group (No. 2) compared to the non-heat stress treatment + water treatment group (No. 1) (Fig. 2). From this result, the heat treatment is considered to have caused significant damage to the tomato plants. The number of tomato fruits was markedly increased in the groups in which the heat stress treatment and the treatment with Val and/or IAA were performed (Nos. 3 to 6) compared to the heat stress treatment + water treatment group (No. 2) (Fig. 2). In particular, in the group in which the heat stress treatment and the treatment with Val and IAA were performed (No. 6), the number of tomato fruits was increased the most, and a synergistic effect of Val and IAA was observed (Fig. 2). In addition, there was no large difference in the timing of increases in tomato fruit number among the treatment groups (Fig. 3). At all cultivation stages, the number of tomato fruits was the largest in the non-heat stress treatment + water treatment group (No. 1); the number of tomato fruits was the second largest in the group in which the heat stress treatment and the treatment with Val and IAA were performed (No. 6); and the number of tomato fruits was the smallest in the heat stress treatment + water treatment group (No. 2). From the above results, it was suggested that heat stress tolerance in plants can be markedly induced by using, in combination, a substance having a property of altering amino acid metabolism in plants, such as Val, and a substance having auxin-like activity, such as IAA.

### Example 2 Evaluation of Heat Stress Tolerance-Inducing Effect of Val, PAA, and Val & PAA

In the present Example, Val (valine) and PAA (phenylacetic acid) were applied to tomato plants individually or in combination, and their heat stress tolerance-inducing effects were evaluated.

### Experimental Materials

Same as in Example 1.

### Plant Cultivation

Same as in Example 1.

### Material Treatment and Heat Treatment

Same as in Example 1, except that the five treatment groups shown in Table 3 were evaluated under the cultivation conditions shown in Table 4 (the maximum high temperature was 37°C).

**[Table 3]**

| Table 3. Treatment groups | | |
|---|---|---|
| No. | Treatments | |
| 1 | Non-HS* | Water |
| 2 | | Water |
| 3 | HS | Val 5 mM |
| 4 | | PAA 10 µM |
| 5 | | Val 5 mM & PAA 10 µM |

| | | |
|---|---|---|
| *HS, heat stress | | |

**[Table 4]**

| Table 4. Growth stages and cultivation conditions of tomato plants | | |
|---|---|---|
| Days after sowing | Temperature condition | Temperature and light |
| 0 day~ | Normal temperature | 6:00~18:00 25°C/ light; 18:00~6:00 20°C/ dark |
| 40 days~ | Normal temperature (Material treatment) | |
| 41 days~ | Heat stress | 6:00~10:00 25°C; 10:00~12:00 28°C; 12:00~16:00 35°C; 16:00~18:00 28°C/ light; 18:00~6:00 25°C/ dark |
| 46 days~ | Normal temperature (Material treatment) | 6:00~18:00 25°C/ light; 18:00~6:00 20°C/ dark |
| 47 days~ | Heat stress | Same as 41 days~ |
| 52 days~66 days | Normal temperature | 6:00~18:00 25°C/ light; 18:00~6:00 20°C/ dark |

### Fruit Examination

Same as in Example 1.

### Results and Discussion

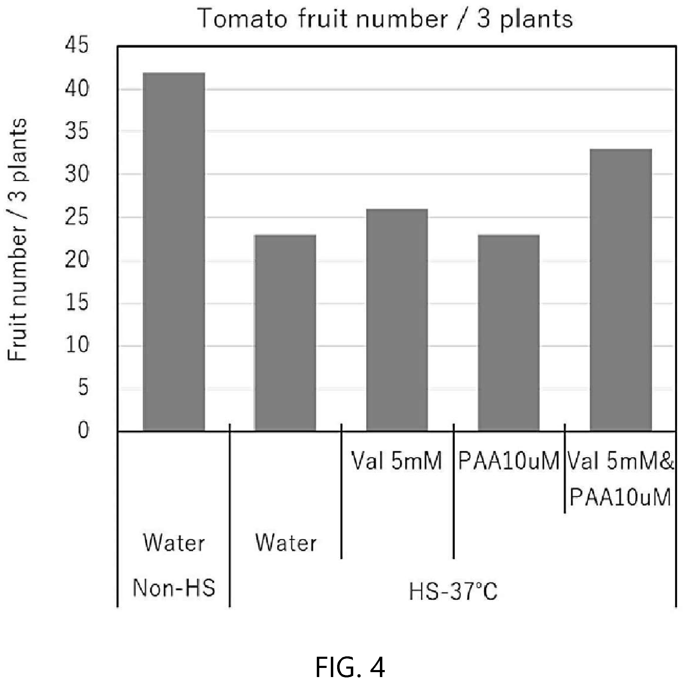

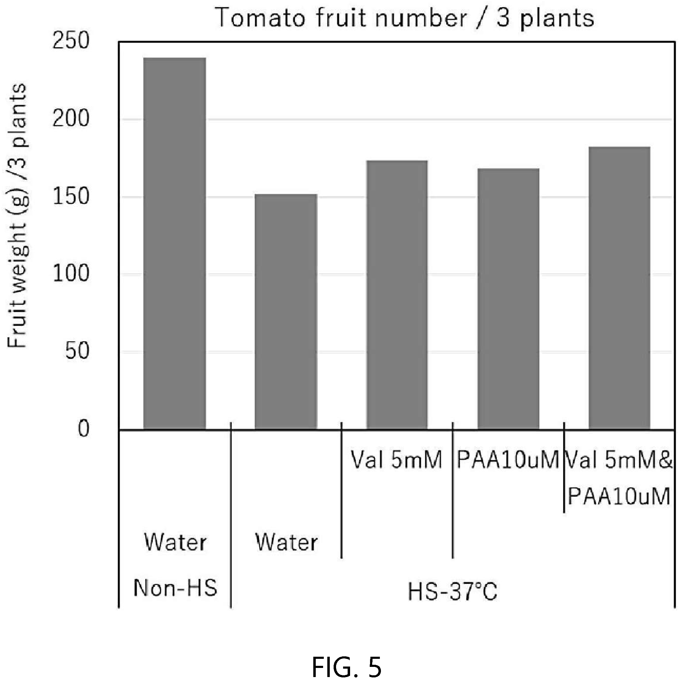

The number and the weight of harvested tomato fruits are shown in Figs. 4 and 5, respectively. The number of tomato fruits was markedly decreased in the heat stress treatment + water treatment group (No. 2) compared to the non-heat stress treatment + water treatment group (No. 1) (Fig. 4). From this result, the heat treatment was considered to have caused significant damage to the tomato plants. In each of the groups in which the heat stress treatment and the treatment with Val or PAA were performed (Nos. 3 and 4), no large difference in the number of tomato fruits was observed compared to the heat stress treatment + water treatment group (No. 2). In contrast, the number of tomato fruits was markedly increased in the group in which the heat stress treatment and the treatment with Val and PAA were performed (No. 5), compared to the heat stress treatment + water treatment group (No. 2). Thus, a synergistic effect of Val and PAA was observed. A correlation was observed between the number and the weight of tomato fruits (Figs.3 and 4). From the above results, it was suggested that heat stress tolerance in plants can be markedly induced by using, in combination, a substance having a property of altering amino acid metabolism in plants, such as Val, and a substance having auxin-like activity, such as PAA.

### Example 3 Evaluation Based on Heat Stress Tolerance-related Genes Experimental Materials

Plants of tomato (cultivar: Regina) were used in evaluation of the genes.

### Plant Body Cultivation and Material Treatment

Two tomato seeds were sown in a slit pot having a diameter of 10.5 cm (10.5 cm (top diameter) × 8.8 cm (height)) filled with potting soil, and cultivated in a biotron at a temperature of 23°C, with a light period of 14 hours (6:00 to 20:00) and a dark period of 10 hours (20:00 to 6:00). As the potting soil, a mixture of Kumiai Nippi Engei Baido No. 1 (Nihon Hiryo Co., Ltd.) and vermiculite at 3:1 (volume ratio) was used. After one week, thinning was performed to leave one plant, and cultivation was continued.

The material was dissolved in water before use. Twenty-five days after the sowing, 0.1% spreading agent "Approach BI" (Kao Corporation) was added to the material treatment solution, and the resulting solution was sprayed over the entire plant. Treatment groups are shown in Table 5. For each treatment group, three tomato plants were used, and 2 mL of the treatment solution per plant was sprayed. Twenty-four hours after the spraying, a 1.5 cm × 1.5 cm section was collected as a sample from the second true leaf.

**[Table 5]**

| Table 5. Treatment groups | | |
|---|---|---|
| Treatment group number | Treatment group | |
| 1 | Mock | Water |
| 2 | Val | 5 mM Val |
| 3 | IAA | 10 µM IAA |
| 4 | PAA | 50 µM PAA |
| 5 | Val & IAA | 5 mM Val + 10 µM IAA |
| 6 | Val & PAA | 5 mM Val + 50 µM PAA |

### Gene Expression Analysis

From each leaf sample collected from tomato, RNA was extracted using a Maxwell^{™} RSC Plant RNA Kit (Promega) according to the manufacturer's instructions. Subsequently, single-stranded cDNA was synthesized from the extracted RNA using a ReverTra Ace^{™} qPCR RT Master Mix (TOYOBO). As genes associated with heat stress tolerance in tomato, the following two genes were evaluated: Heat shock factor A2 (HsFA2) and Ascorbate peroxidases (APX).

Using the above cDNA as a template, real-time PCR was performed using the primers shown in Table 6, and the expression level of each gene was calculated as a relative expression level with respect to the Actin gene.

**[Table 6]**

| Table 6. Primer list and primer sequences | | | |
|---|---|---|---|
| Gene name | Primer | Sequence | SEQ ID NO: |
| SLHsFA2 Accession No. Solyc08g062960 | F | TCTGTTGTGACAGCAAATGG | 1 |
| | R | TACTTCCTCTGCTGCTCGAT | 2 |
| SLAPX Accession No. Solyc06g005150 | F | CGCCATATCACACAAGAAGC | 3 |
| | R | TAACTCAGAGCCACCACTGC | 4 |

### Results

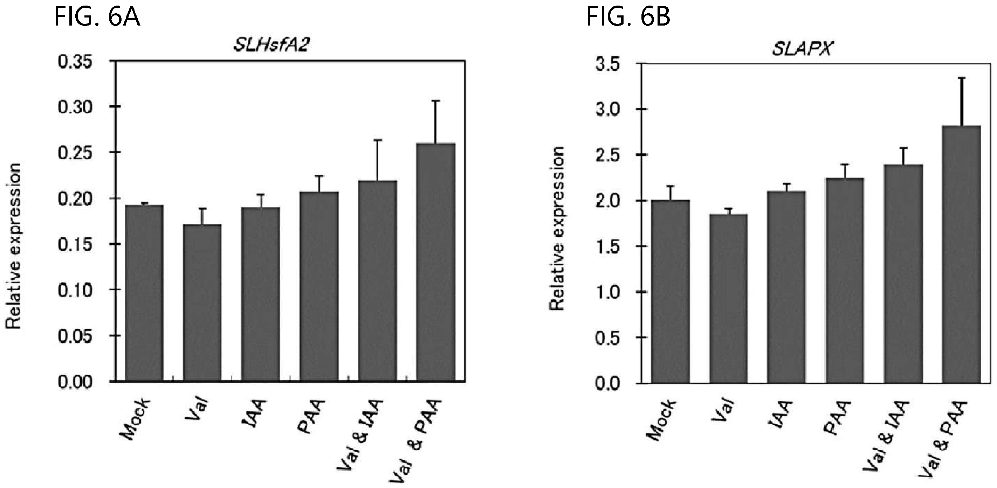

The results are shown in Fig. 6 (n = 3). Compared to Mock (water), no difference in expression was observed for either SLHsfA2 or SLAPX when Val, IAA, and PAA were individually used. In contrast, both the combination Val & IAA and the combination Val & PAA promoted expression of both genes. From the above results, the combination Val & IAA and Val & PAA were considered to have an effect of improving heat stress tolerance.

### Example 4 Tomato Pot Test

### Experimental Materials

Tomato: Home Momotaro, rootstock (Boranchi).

### Plant Cultivation and Treatment Method

Sandy loam (SL) was filled into a planter at 0.18 m²/planter, and two tomato plants were planted therein. As a fertilizer, OK-F-1 (OAT Agrio Co., Ltd.) was used. The fertilizer was diluted 2000-fold with water, and applied as appropriate at 2000 mL/plant/application. Topping was performed with one leaf left above the fourth truss, and axillary buds were removed as appropriate. Cultivation was performed in a glasshouse under natural light.

### Heat Treatment and Material Treatment

Five treatment groups were evaluated (Table 7). The water-treated non-heat stress treatment group was used as a positive control. The other four treatment groups were subjected to heat treatment. The heat treatment was performed twice. The first treatment was performed for 10 days at the pre-flowering stage of the first truss, and the second treatment was performed for 10 days at the flowering stage of the fourth truss. The heat treatment was performed by opening and closing side windows and roof windows of the glasshouse (with a target maximum temperature of 35°C in the glasshouse).

The material was applied by spraying onto stems and leaves at 50 mL per plant on the start day of the heat treatment and three days thereafter. To each material, a spreading agent (Approach BI (Kao)) was added to a final concentration of 0.05%.

**[Table 7]**

| Table 7. Treatment groups | | |
|---|---|---|
| Treatment group number | Treatment group | |
| 1 | Absence of heat stress | Water |
| 2 | Presence of heat stress | Water |
| 3 | | PAA 10 µM |
| 4 | | Val 5 mM |
| 5 | | PAA 10 µM + Val 5 mM |

### Fruit Examination

Harvesting and examination were performed 11 times until the fourth truss matured.

### Results and Discussion

Regarding fruit yield, harvesting and examination were performed 11 times until the fourth truss matured.

The average of the maximum air temperature during the first stress treatment period was 29.8°C in the non-heat stress treatment group, and 33.2°C in the heat stress treatment group. The average during the second period was 30.8°C in the non-heat stress treatment group, and 34.3°C in the heat stress treatment group.

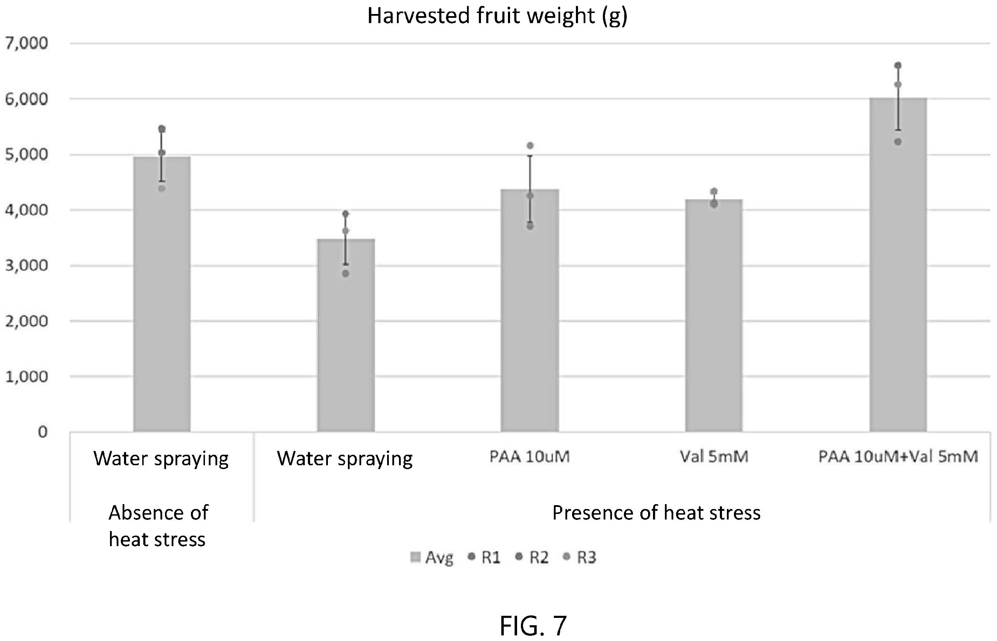

Fig. 7 shows the harvested fruit weight in each treatment group. The water-sprayed heat stress treatment group showed a lower harvested fruit weight than that in the non-heat stress treatment group, suggesting that the water-sprayed heat stress treatment group was subjected to heat stress. Among the heat stress treatment groups, the PAA 10 µM + Val 5 mM group showed the highest harvested fruit weight, which exceeded even the harvested fruit weight in the non-heat stress treatment group. This was followed by the PAA 10 µM group and the Val 5 mM group in this order, and both exceeded the water-sprayed group.

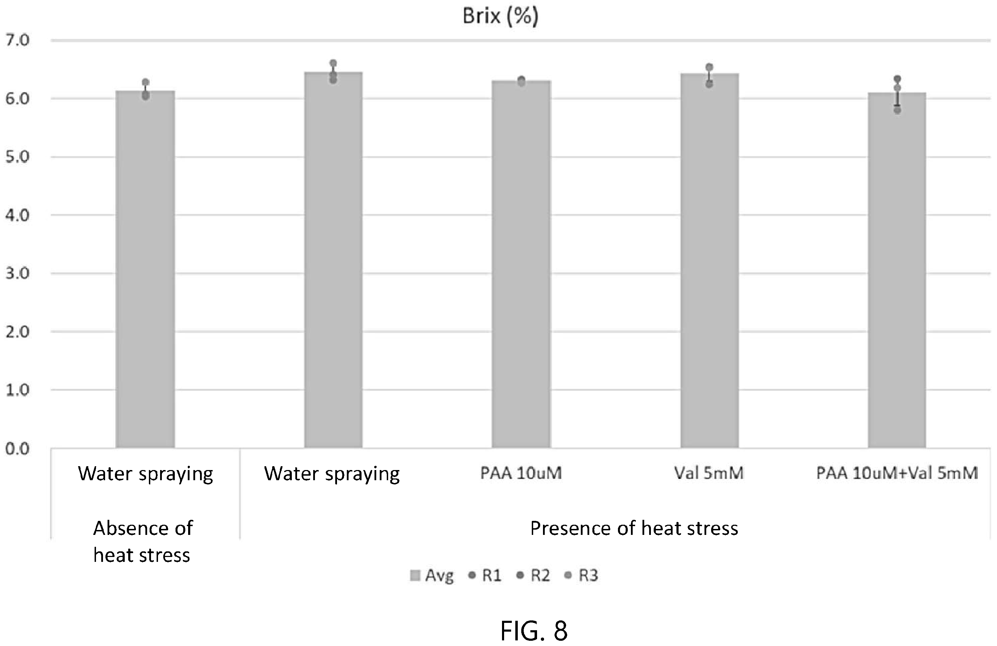

Fig. 8 shows the fruit Brix in each treatment group. No clear difference was observed among the treatment groups. In general, fruit yield and Brix are in a trade-off relationship, and Brix decreases as the yield increases. However, with the materials used in this test, the yield could be improved without decreasing Brix.

From the above evaluation results, it was shown that the combination of Val and PAA dramatically suppressed a decrease in the yield or increased the yield, compared to water treatment and to either Val or PAA treatment alone, indicating that the combination is effective as a material for improving the heat stress tolerance.

### Example 5 Rice Pot Test

### Experimental Materials

Rice cultivar: Nipponbare

### Plant Body Cultivation and Material Treatment

### Sowing and Planting of Rice

Prior to sowing, rice seeds were sterilized with 25% antiformin and 70% ethanol. Filter paper was placed in a Petri dish, and rice seeds were placed on the filter paper. The filter paper was sufficiently wetted with sterile water, and the rice seeds were germinated in a dark place at 25°C. Six days after the sowing, the germinated rice seeds were planted in a cell tray. As the potting soil in the cell tray, a mixed soil of Kumiai Baido No. 1:vermiculite = 7:3 (v/v) was used. The rice plants planted in the cell tray were cultivated in a chamber under the following conditions: 14 h/light period at 28°C and 10 h/dark period at 22°C.

### Rice Cultivation and Material Treatment

On June 20, rice seedlings cultivated in the chamber for 18 days were transplanted to magnet pots, and cultivated until harvest in an outdoor cultivation water tank apparatus. In the magnet pots, 2.3 kg of a potting soil of Kumiai Baido No. 1:vermiculite = 7:3 (v/v) was used, and two rice seedlings were transplanted to each pot. During the cultivation, water was appropriately managed. From one month after the transplantation, additional fertilizer was applied with ammonium sulfate and Hyponex three times at intervals of one week.

At the heading stage, one week after the start of heading of rice, material spraying and heat treatment were each performed twice at intervals of one week. The heat treatment was performed about 16 hours after the spraying of a material. Material treatment groups are shown in Table 8. Five pots were included in each treatment group as replicates. The material was diluted with water to prepare a treatment solution, and 0.1% spreading agent "Approach BI" (Kao Corporation) was added to the treatment solution, followed by spraying 60 mL per pot of the prepared aqueous material solution onto the whole plants. For the heat treatment, the rice plants were placed in a mini-house for 6 hours from 10:00 to 16:00, and the temperature was about 37°C to 39°C. After completion of the heat treatment, the plants were further cultivated, and on October 8, 50 days after transplanting to Wagner pots, an aboveground part of each plant was cut and harvested.

**[Table 8]**

| Table 8. Treatment groups | | |
|---|---|---|
| Treatment group number | Treatment group | |
| 1 | Presence of heat stress | Water |
| 2 | | Val 5 mM |
| 3 | | PAA 10 µM |
| 4 | | Val 5 mM & PAA 10 µM |
| 5 | Absence of heat stress | |

### Examination

The cut aboveground parts of the plants, including seeds, were dried for 15 days, and the total seed weight, the fertile seed weight, and the seed fertility were examined. The fertile seed weight is the weight of seeds obtained by removing sterile seeds of empty husks using a threshing machine. From the total seeds, 10 mL of seeds (about 100 to 150 grains) was randomly taken out into a 50-mL Falcon tube, and fertile seeds and sterile seeds were separated from each other, followed by counting their numbers. The proportion (percentage) of the fertile seeds to the total number of seeds was defined as the seed fertility.

### Results and Discussion

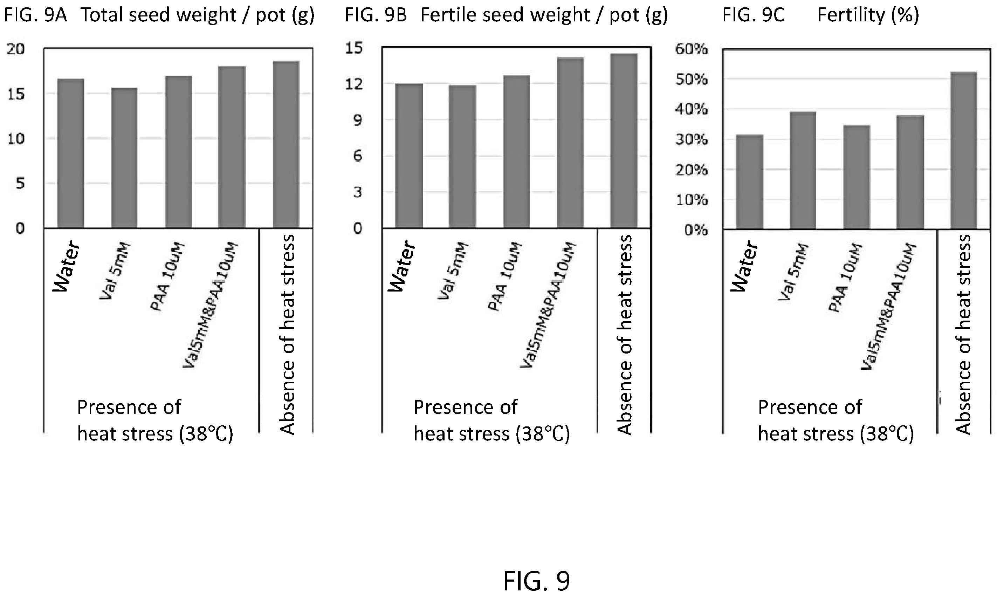

Fig. 9 and Table 9 show the results on the total seed weight, the fertile seed weight, and the seed fertility. Compared to the group without heat stress, each of the treatment groups subjected to heat stress showed decreases in all three items shown in the figure. It is therefore considered that plants in the treatment groups were damaged due to the high temperature. Under the conditions where heat treatment was performed, neither the treatment with Val alone nor the treatment with PAA alone showed significant differences in the total seed weight and the fertile seed weight compared to the water treatment. In contrast, the combined treatment with Val and PAA increased the total seed weight and the fertile seed weight by 8.5% and 17.7%, respectively. Each of the treatment with Val alone, the treatment with PAA alone, and the combined treatment with both increased the seed fertility. In particular, each of the treatment with PAA alone and the combined treatment with Val and PAA increased the seed fertility by 20% or more.

Under the heat conditions, the combination of Val and PAA increased the total seed weight, the fertile seed weight, and the seed fertility of rice compared to the control water treatment. Based on these results, the combination of Val and PAA was suggested to alleviate heat-induced damage to seed formation and rice growth, and improve heat tolerance in rice.

**[Table 9]**

| Table 9. Relative values based on comparison to heat treatment + water treatment group | | | | |
|---|---|---|---|---|
| Treatment group | | Relative values based on comparison to heat treatment + water treatment group | | |
| | | Total seed weight | Fertile seed weight | Fertility |
| Presence of heat treatment (38°C) | Water | 100% | 100% | 100% |
| | Val 5 mM | 93.9% | 98.7% | 123.9% |
| | PAA 10 µM | 101.8% | 105.6% | 110.8% |
| | Val 5 mM & PAA 10 µM | 108.5% | 117.7% | 120.3% |
| Absence of heat treatment | | 112.2% | 120.7% | 166.0% |

## Claims

1. A composition for inducing heat stress tolerance in a plant, the composition comprising the following ingredients (A) and (B):
(A) a substance having a property of altering amino acid metabolism in a plant; and
(B) a substance having auxin-like activity.

2. The composition according to claim 1, wherein the ingredient (A) is the following ingredient (A1), (A2), (A3), or a combination thereof:
(A1) one or more ingredients selected from the group consisting of branched-chain amino acid-related compounds, and intermediates in biosynthetic pathways and catabolic pathways thereof;
(A2) a substance having inhibitory activity on acetolactate synthase; and
(A3) a substance having inhibitory activity on 5-enolpyruvylshikimate-3-phosphate synthase.

3. The composition according to claim 2, wherein the ingredient (A1) is one or more ingredients selected from the group consisting of pyruvic acid, ketobutyric acid, acetolactic acid, acetohydroxybutyric acid, 2,3-dihydroxyisovaleric acid, 2,3-dihydroxy-3-methylvaleric acid, α-ketoisovaleric acid, ketomethylvaleric acid, 2-isopropylmalic acid, 3-isopropylmalic acid, ketoisocaproic acid, valine, leucine, isoleucine, and derivatives thereof.

4. The composition according to claim 2, wherein the ingredient (A1) is one or more ingredients selected from the group consisting of valine, leucine, and α-ketoisovaleric acid.

5. The composition according to claim 2, wherein the branched-chain amino acid is an L-isomer.

6. The composition according to claim 2, wherein the ingredient (A2) is one or more ingredients selected from the group consisting of sulfonylurea compounds, imidazoline compounds, pyrimidinylsalicylic acid compounds, triazolopyrimidinesulfonamide compounds, pyrimidinyl(thio)benzoate compounds, sulfonanilide compounds, and sulfonylaminocarbonyltriazolinone compounds.

7. The composition according to claim 2, wherein the ingredient (A3) is glyphosate.

8. The composition according to claim 1 or 2, wherein the ingredient (B) is one or more ingredients selected from the group consisting of indole-3-acetic acid, 4-chloroindole-3-acetic acid, 2,4-dichlorophenoxyacetic acid, 2,4,5-trichlorophenoxyacetic acid, naphthaleneacetic acid, naphthoxyacetic acid, phenylacetic acid, and analogs thereof.

9. The composition according to claim 1, wherein the ingredient (B) is one or more ingredients selected from the group consisting of indole-3-acetic acid and phenylacetic acid.

10. The composition according to claim 2, wherein the composition is used in the form of a liquid containing the ingredient (A1) at a concentration of 200 µM to 200 mM.

11. The composition according to claim 2, wherein the composition is used in the form of a liquid containing the ingredient (A2) at a concentration of 5 nM to 5 µM.

12. The composition according to claim 2, wherein the composition is used in the form of a liquid containing the ingredient (A3) at a concentration of 500 nM to 100 µM.

13. The composition according to claim 1 or 2, wherein the composition is used in the form of a liquid containing the ingredient (B) at a concentration of 500 nM to 500 µM.

14. The composition according to claim 1 or 2, wherein the induction of heat stress tolerance is the alleviation of heat stress symptoms.

15. The composition according to claim 14, wherein the alleviation of the heat stress symptoms is an increase in plant yield.

16. The composition according to claim 1 or 2, wherein the plant is a Poaceae plant, a Solanaceae plant, a Cucurbitaceae plant, a Fabaceae plant, a Brassicaceae plant, a Rosaceae plant, a Moraceae plant, a Malvaceae plant, an Apiaceae plant, a Liliaceae plant, an Asteraceae plant, an Amaranthaceae plant, an Ericaceae plant, a Vitaceae plant, a Rutaceae plant, a Rubiaceae plant, an Oleaceae plant, a Lauraceae plant, an Anacardiaceae plant, a Sapindaceae plant, or a Lamiaceae plant.

17. A method of inducing heat stress tolerance in a plant, the method comprising applying the following ingredients (A) and (B) to the plant:
(A) a substance having a property of altering amino acid metabolism in a plant; and
(B) a substance having auxin-like activity.

18. A method of producing a plant body, the method comprising:
applying the following ingredients (A) and (B):
(A) a substance having a property of altering amino acid metabolism in a plant; and
(B) a substance having auxin-like activity;
to a plant and cultivating the plant; and
harvesting the plant body.

19. The method according to claim 17 or 18, wherein the ingredient (A) is the following ingredient (A1), (A2), (A3), or a combination thereof:
(A1) one or more ingredients selected from the group consisting of branched-chain amino acid-related compounds, and intermediates in biosynthetic pathways and catabolic pathways thereof;
(A2) a substance having inhibitory activity on acetolactate synthase; and
(A3) a substance having inhibitory activity on 5-enolpyruvylshikimate-3-phosphate synthase.

20. The method according to claim 19, wherein the ingredient (A1) is one or more ingredients selected from the group consisting of pyruvic acid, ketobutyric acid, acetolactic acid, acetohydroxybutyric acid, 2,3-dihydroxyisovaleric acid, 2,3-dihydroxy-3-methylvaleric acid, α-ketoisovaleric acid, ketomethylvaleric acid, 2-isopropylmalic acid, 3-isopropylmalic acid, ketoisocaproic acid, valine, leucine, isoleucine, and derivatives thereof.

21. The method according to claim 19, wherein the ingredient (A1) is one or more ingredients selected from the group consisting of valine, leucine, and α-ketoisovaleric acid.

22. The method according to claim 19, wherein the branched-chain amino acid is an L-isomer.

23. The method according to claim 19, wherein the ingredient (A2) is one or more ingredients selected from the group consisting of sulfonylurea compounds, imidazoline compounds, pyrimidinylsalicylic acid compounds, triazolopyrimidinesulfonamide compounds, pyrimidinyl(thio)benzoate compounds, sulfonanilide compounds, and sulfonylaminocarbonyltriazolinone compounds.

24. The method according to claim 19, wherein the ingredient (A3) is glyphosate.

25. The method according to claim 17 or 18, wherein the ingredient (B) is one or more ingredients selected from the group consisting of indole-3-acetic acid, 4-chloroindole-3-acetic acid, 2,4-dichlorophenoxyacetic acid, 2,4,5-trichlorophenoxyacetic acid, naphthaleneacetic acid, naphthoxyacetic acid, phenylacetic acid, and analogs thereof.

26. The method according to claim 17 or 18, wherein the ingredient (B) is one or more ingredients selected from the group consisting of indole-3-acetic acid and phenylacetic acid.

27. The method according to claim 19, wherein the ingredient (A1) is used in the form of a liquid containing the ingredient (A1) at a concentration of 200 µM to 200 mM.

28. The method according to claim 19, wherein the ingredient (A2) is used in the form of a liquid containing the ingredient (A2) at a concentration of 5 nM to 5 µM.

29. The method according to claim 19, wherein the ingredient (A3) is used in the form of a liquid containing the ingredient (A3) at a concentration of 500 nM to 100 µM.

30. The method according to claim 17 or 18, wherein the ingredient (B) is used in the form of a liquid containing the ingredient (B) at a concentration of 500 nM to 500 µM.

31. The method according to claim 17 or 18, wherein the induction of heat stress tolerance is the alleviation of heat stress symptoms.

32. The method according to claim 31, wherein the alleviation of the heat stress symptoms is an increase in plant yield.

33. The method according to claim 17 or 18, wherein the plant is a Poaceae plant, a Solanaceae plant, a Cucurbitaceae plant, a Fabaceae plant, a Brassicaceae plant, a Rosaceae plant, a Moraceae plant, a Malvaceae plant, an Apiaceae plant, a Liliaceae plant, an Asteraceae plant, an Amaranthaceae plant, an Ericaceae plant, a Vitaceae plant, a Rutaceae plant, a Rubiaceae plant, an Oleaceae plant, a Lauraceae plant, an Anacardiaceae plant, a Sapindaceae plant, or a Lamiaceae plant.
